(19) **Europäisches Patentamt / European Patent Office / Office européen des brevets**

(11) **EP 2 903 334 B1**

(12) **EUROPEAN PATENT SPECIFICATION**

(45) Date of publication and mention
of the grant of the patent:
**03.11.2021 Bulletin 2021/44**

(51) Int Cl.:
*H04W 28/16* (2009.01)          *H04W 4/00* (2018.01)
*H04L 5/00* (2006.01)          *H04W 72/04* (2009.01)

(21) Application number: **13841357.0**

(86) International application number:
**PCT/CN2013/083579**

(22) Date of filing: **16.09.2013**

(87) International publication number:
**WO 2014/048261 (03.04.2014 Gazette 2014/14)**

(54) **INFORMATION TRANSMISSION METHOD AND DEVICE**

INFORMATIONSÜBERTRAGUNGSVERFAHREN UND -VORRICHTUNG

PROCÉDÉ ET DISPOSITIF DE TRANSMISSION D'INFORMATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.09.2012 CN 201210379738**

(43) Date of publication of application:
**05.08.2015 Bulletin 2015/32**

(73) Proprietor: **ZTE Corporation
Shenzhen, Guangdong 518057 (CN)**

(72) Inventors:
• **LI, Xincai
Shenzhen
Guangdong 518057 (CN)**
• **DAI, Bo
Shenzhen
Guangdong 518057 (CN)**
• **SHI, Jing
Shenzhen
Guangdong 518057 (CN)**
• **XIA, Shuqiang
Shenzhen
Guangdong 518057 (CN)**
• **FANG, Huiying
Shenzhen
Guangdong 518057 (CN)**

(74) Representative: **Mozzi, Matteo et al
Jacobacci & Partners S.p.A.
Via Senato, 8
20121 Milano (IT)**

(56) References cited:
**CN-A- 102 300 267      CN-A- 102 316 535
US-B1- 8 244 244**

• **3GPP: "3rd Generation Partnership Project;
Technical Specification Group Radio Access
Network; Study on provision of low-cost MTC UEs
based on LTE; (Release 11)", 3GPP DRAFT;
R1-123075_36888-200, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE, 11 June 2012 (2012-06-11),
XP050601305, [retrieved on 2012-06-11]**
• **HUAWEI ET AL: "Bandwidth reduction for low
cost MTC UE and text proposal", 3GPP DRAFT;
R1-120051, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE, vol. RAN
WG1, no. Dresden, Germany; 20120206 -
20120210, 31 January 2012 (2012-01-31),
XP050562638, [retrieved on 2012-01-31]**
• **HUAWEI ET AL: "Recommendation for
bandwidth reduction", 3GPP DRAFT; R1-121708
RECOMMENDATION FOR BANDWIDTH
REDUCTION, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE, vol. RAN
WG1, no. Jeju, Korea; 20120326 - 20120330, 23
March 2012 (2012-03-23), XP050600066,
[retrieved on 2012-03-23]**

• FUJITSU: "Summary of email discussion on CSS for ePDCCH", 3GPP DRAFT; R1-121193 CSS ON EPDCCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Jeju, Korea; 20120326 - 20120330, 29 March 2012 (2012-03-29), XP050600070, [retrieved on 2012-03-29]

• None

**Description**

**Technical Field**

The present invention relates to the field of communication, in particular to an information transmission method and device.

**Background**

Machine Type Communication (MTC) User Equipment (UE, also referred to as terminal) which is also called Machine To Machine (M2M) user communication equipment is a major application form of the Internet of Things at the present stage. Low power consumption and low cost are important guarantees for MTC UE to apply on a large scale. At present, an M2M technology has been supported by internationally known manufacturers such as Nippon Electric Company (NEC), Hewlett-Packard Development Company, L.P. (HP), Intel, International Business Machines (IBM) and American Telephone and Telegraph Company (AT&T). The M2M technology is also recognized by mobile operators of various countries. M2M equipment in the current market is mainly based on a Global System of Mobile Communication (GSM). In recent years, more and more mobile operators select Long Term Evolution (LTE) as an evolution direction of a broadband wireless communication system in the future due to the high spectral efficiency of the LTE. Various kinds of LTE-based M2M data services will also be increasingly attractive. However, only when the cost of LTE-M2M equipment is lower than a GSM-based MTC UE, can the M2M services be actually transferred from the GSM to an LTE system.

The cost of the MTC UE mainly includes the cost in baseband processing and radio frequency, and an effective manner for lowering the cost of the MTC UE is to reduce a downlink receiving bandwidth of the UE. Further analysis shows that the cost is slightly influenced by reduction in a radio frequency bandwidth, so that the cost can be effectively lowered only by reducing a baseband processing bandwidth of the UE. The receiving bandwidth of the UE may be set to be a bandwidth such as 1.4MHz or 3MHz, etc, supported by the LTE system, that is, a maximum downlink system bandwidth supported by the MTC UE is usually smaller than a maximum receiving bandwidth 20MHz which is required under a single carrier by a conventional LTE UE (Ordinary Legacy R8/9/10 UE, OL UE for short).

A Radio Frame (RF) in the LTE system includes a frame structure in a Frequency Division Duplex (FDD) mode and a Time Division Duplex (TDD) mode.

Fig. 1 is a diagram of a frame structure in an FDD mode in an LTE technology according to a related art. As shown in Fig. 1, a 10ms RF consists of 20 0.5ms slots which are numbered as 0~19, and slots 2i and 2i+1 form a subframe i with a length of 1ms.

Fig. 2 is a diagram of a frame structure in a TDD mode in an LTE technology according to a related art. As shown in Fig. 2, a 10ms RF consists of two 5ms half frames, each half frame includes 5 1ms subframes, and the subframe i is defined into two 0.5ms slots 2i and 2i+1.

In the two frame structures, for a Normal Cyclic Prefix (Normal CP), a slot includes 7 symbols, each having a length of 66.7us, wherein a CP length of the first symbol is 5.21 us, and CP lengths of the other 6 symbols are 4.69us. For an Extended Cyclic Prefix (Extended CP), a slot includes 6 symbols, and CP lengths of all the symbols may be 16.67us.

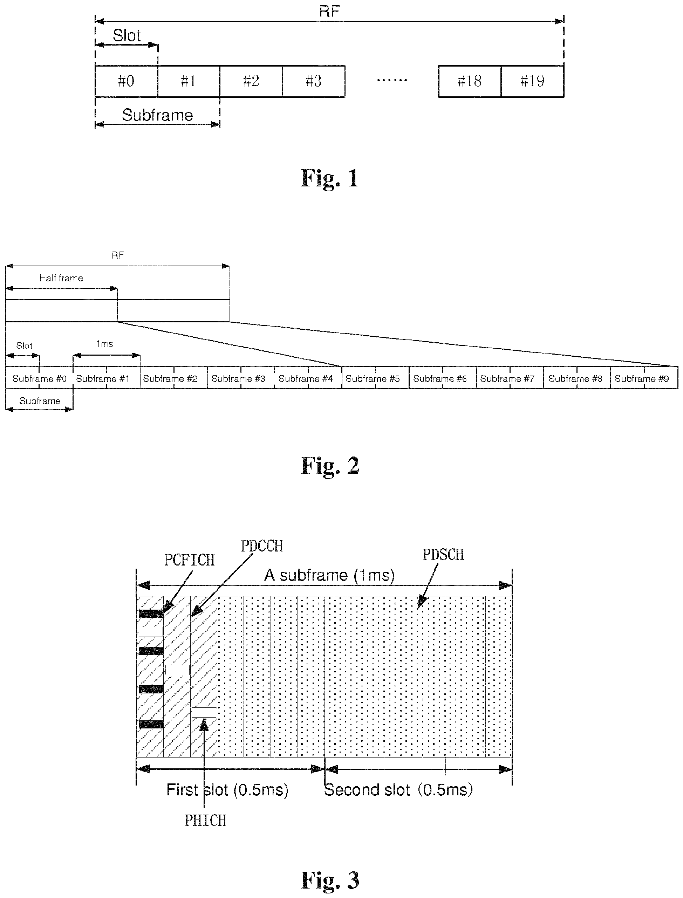

Fig. 3 is a diagram of a time-frequency structure of each physical channel of an ordinary downlink subframe in an LTE technology according to a related art. As shown in Fig. 3, the following downlink physical channels are defined in the LTE technology: a Physical Control Format Indicator Channel (PCFICH), a Physical Hybrid Automatic Retransmission Request Indicator Channel (PHICH), a Physical Downlink Control Channel (PDCCH) and a Physical Downlink Shared Channel (PDSCH).

The PCFICH is positioned at the first symbol of the subframe and configured to indicate the number of symbols occupied by PDCCH control signalling in the subframe.

For the condition that a downlink bandwidth $N_{\text{RB}}^{\text{DL}} > 10RB$ , a Control Format Indicator (CFI) may be 1, 2 or 3. For the condition that $N_{\text{RB}}^{\text{DL}} > 10RB$ , the CFI may be 2, 3 or 4, i.e. CFI+1.

The PHICH is positioned at the first symbol or the former three symbols of the subframe and configured to carry Acknowledgement/Negative (ACK/NACK) feedback information for a Physical Uplink Shared Channel (PUSCH).

The PDCCH is configured to bear Downlink Control Information (DCI), and includes: uplink and downlink scheduling information and uplink power control information. The number of the symbols specifically occupied in a time-domain is indicated by the PCFICH, and a frequency-domain position is mapped to the whole system bandwidth.

Radio Network Temporary Identifier (RNTI) participates in the Cyclic Redundancy Check (CRC) scrambling of the PDCCH to distinguish different application occasions. The RNTIs related to uplink include: a Cell Radio Network Temporary Identifier (C-RNTI), a Semi-Persistent Scheduling Cell Radio Network Temporary Identifier (SPS C-RNTI), a Temporary C-RNTI (Temp-C-RNTI), a Transmit Power Control PUCCH RNTI (TPC-PUCCH-RNTI) and a TPC-PUSCH-RNTI. The RNTIs related to downlink include a System Information Radio Network Temporary Identifier (SI-RNTI), a Random Access RNTI (RA-RNTI), a Paging RNTI (P-RNTI), a C-RNTI, an SPS C-RNTI and a Temp-C-RNTI. Functions of each RNTI are classified as follows:

     (1) the SI-RNTI: system Message (MSG);
     (2) the P-RNTI: paging;
     (3) the RA-RNTI: identifying a resource block used for transmitting an RA preamble by a user;
     (4) the C-RNTI: user service;
     (5) the Temp-C-RNTI: used during the RA;
     (6) the TPC-PUCCH-RNTI: PUCCH uplink power control information;
     (7) the TPC-PUSCH-RNTI: PUSCH uplink power control information; and
     (8) the SPS C-RNTI is used in the same way as the C-RNTI, and is used only during SPS.

The PDSCH is configured to transmit a system shared MSG, a paging MSG and a downlink data service. A specific frequency-domain position of the PDSCH in the subframe is indicated by the PDCCH, and a time-domain position of the PDSCH starts from the next Orthogonal Frequency Division Multiplexing (OFDM) symbol of a control area.

Contents of control information transmitted by an Enhanced PDCCH (ePDCCH), an Enhanced PCFICH (ePCFICH) and an Enhanced PHICH (ePHICH) are the same as those transmitted by the original PDCCH, PCFICH and PHICH, but are positioned in an original PDSCH area and occupy frequency-domain resources which are smaller than 1.4MHz. Because of limitation of its bandwidth, the MTC UE can not receive original broadband control information completely, but can receive enhanced narrowband control information. In addition, along with the development of a Long Term Evolution-Advanced (LTE-A) carrier aggregation technology, a New Carrier Type (NCT) is presented in LTE R11, and detailed characteristics of this carrier of the NCT are still under discussion. The carrier of the NCT transmits the control information by virtue of the ePDCCH.

If low-cost and bandwidth-limited MTC UE accesses the LTE system, the first problem to be solved is how to determine the time-frequency domain positions under a narrowband condition, so that it is necessary to design a channel structure allowing the coexistence of two kinds of UE for a base station to ensure both the OL UE and the MTC UE can receive related information, and particularly, the related information of the narrowband MTC UE should be ensured to be at proper time-frequency domain positions under a broadband condition. Therefore, the MTC UE can correctly receive its own downlink information.

Aiming at the problem of how to correctly receive the downlink information under a downlink narrowband condition in the related art, there is yet no effective solution presented.

Document 3GPP: "3rd Generation Partnership Project; Technical Specification Group Radio Access Network; Study on provision of low-cost MTC UEs based on LTE; (Release 11)", 3GPP DRAFT; R1-123075_36888-200, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, 11 June 2012, relates to provision of low-cost MTC LTE UEs based on LTE.

Document HUAWEI ET AL: "Bandwidth reduction for low cost MTC UE and text proposal", 3GPP DRAFT; R1-120051, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. Dresden, Germany; 31 January 2012, relates to bandwidth reduction for low cost MTC UE.

Document HUAWEI ET AL: "Recommendation for bandwidth reduction", 3GPP DRAFT; R1-121708 RECOMMENDATION FOR BANDWIDTH REDUCTION, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. Jeju, Korea; 23 March 2012, relates to bandwidth reduction for both RF and baseband aspects.

Document FUJITSU: "Summary of email discussion on CSS for ePDCCH", 3GPP DRAFT; R1-121193 CSS ON EPDCCH, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. Jeju, Korea; 29 March 2012, relates to the support for CSS on ePDCCH.

## Summary

For the problem of how to correctly receive downlink information under a downlink narrowband condition in the related art, the embodiments of the present invention provide an information transmission scheme, so as to at least solve the problem.

The object of the invention is achieved by the subject-matter of the independent claims. The dependent claims describe advantageous embodiments. The scope of protection of the invention is solely limited by the appended claims.

By the present invention, under the condition that the base station determines that the receiving bandwidth of the UE is smaller than the system bandwidth or the component carrier accessed by the UE is of the NCT, the downlink data is transmitted to the UE within the receiving bandwidth of the UE according to the preset RF, the preset subframes and/or the preset time-domain and frequency-domain resources, so that the problem of how to correctly receive the downlink information under a downlink narrowband condition in the related art is solved, UE of different types can coexist in a system, and an application range of the system is widened.

## Brief Description of the Drawings

Drawings, provided for further understanding of the present invention and forming a part of the specification, are used to explain the present invention together with embodiments of the present invention rather than to limit the present invention, wherein:

Fig. 1 is a schematic diagram of a frame structure in an FDD mode in an LTE technology according to the related art;
Fig. 2 is a schematic diagram of a frame structure in a TDD mode in an LTE technology according to the related art;
Fig. 3 is a schematic diagram of a time-frequency structure of each physical channel of an ordinary downlink subframe in an LTE system according to the related art;

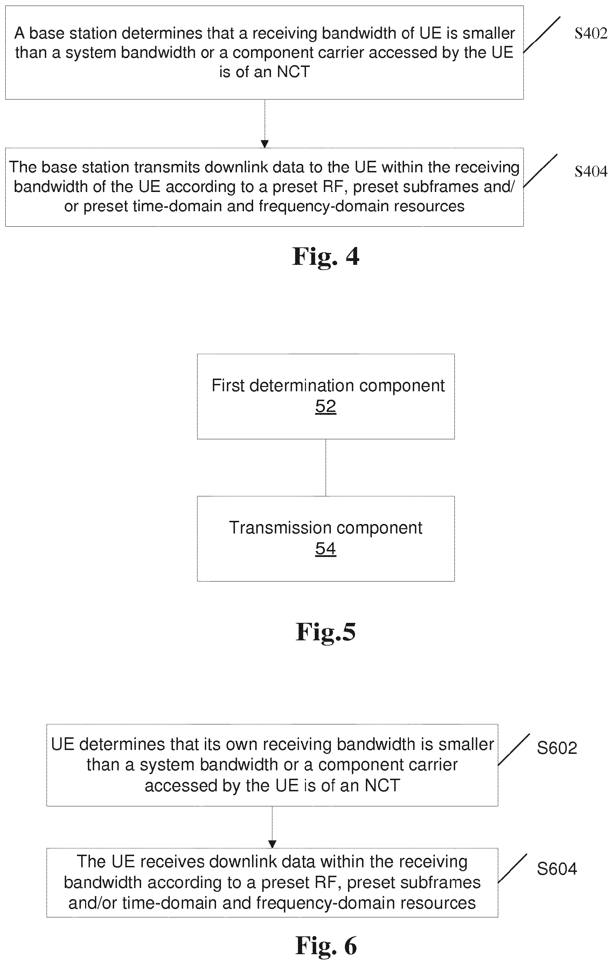

Fig. 4 is a flowchart of an information transmission method according to an embodiment of the present invention;
Fig. 5 is a structure diagram of an information transmission device according to an embodiment of the present invention;
Fig. 6 is a flowchart of another information transmission method according to an embodiment of the present invention;

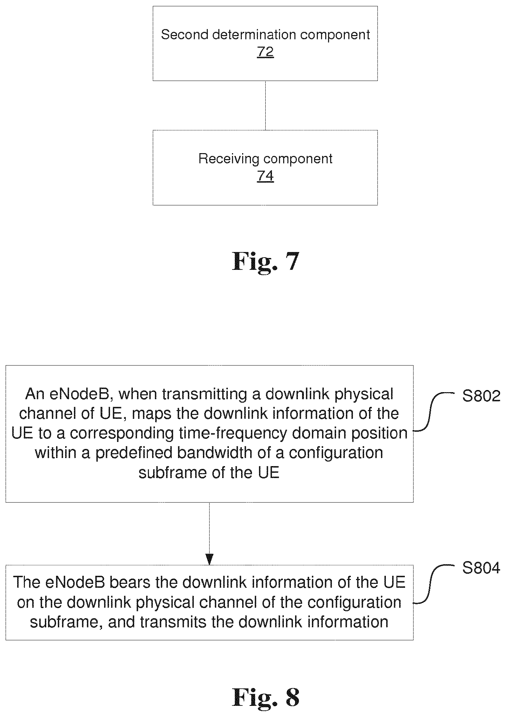

Fig. 7 is a structure diagram of another information transmission device according to an embodiment of the present invention;
Fig. 8 is a flowchart of downlink information transmission on a base station side according to embodiment 1 of the present invention;

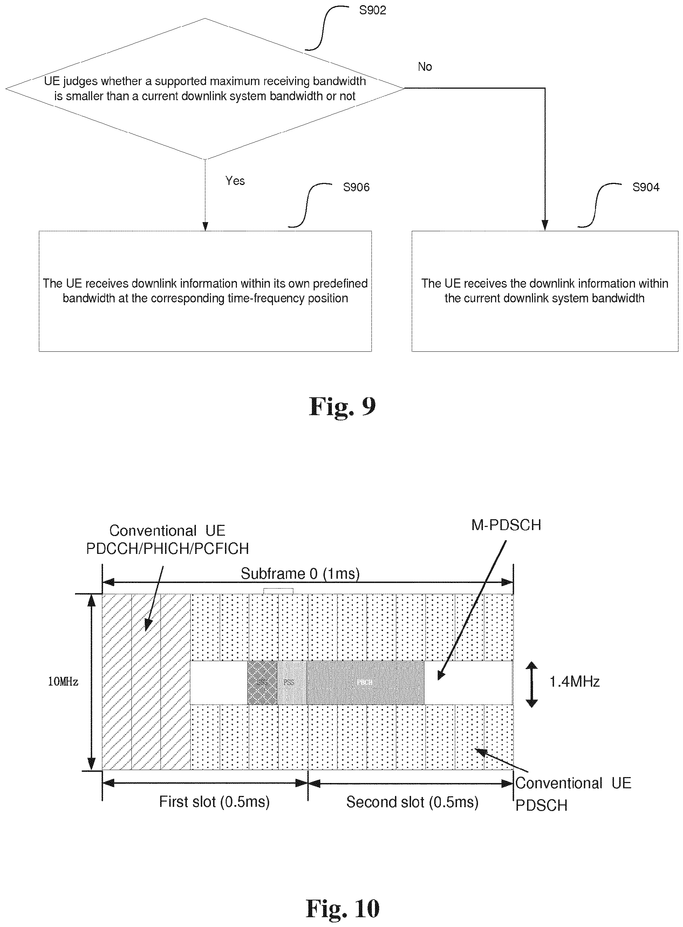

Fig. 9 is a flowchart of downlink information receiving on an MTC UE side according to embodiment 2 of the present invention;
Fig. 10 is a schematic diagram of a time-frequency structure of a downlink subframe according to application example 1 of the present invention;

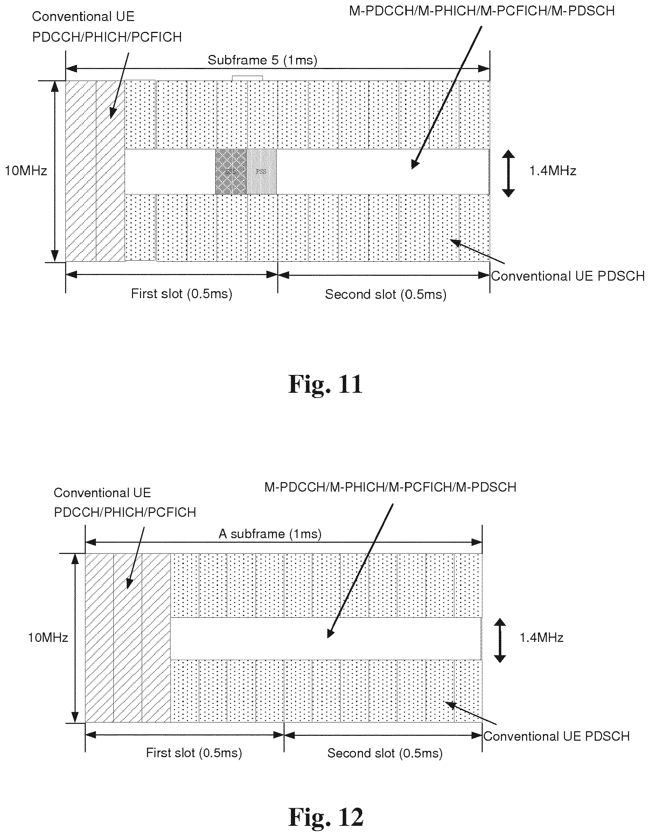

Fig. 11 is a schematic diagram of a time-frequency structure of a downlink subframe according to application example 2 of the present invention;
Fig. 12 is a schematic diagram of a time-frequency structure of a downlink subframe according to application example 3 of the present invention;

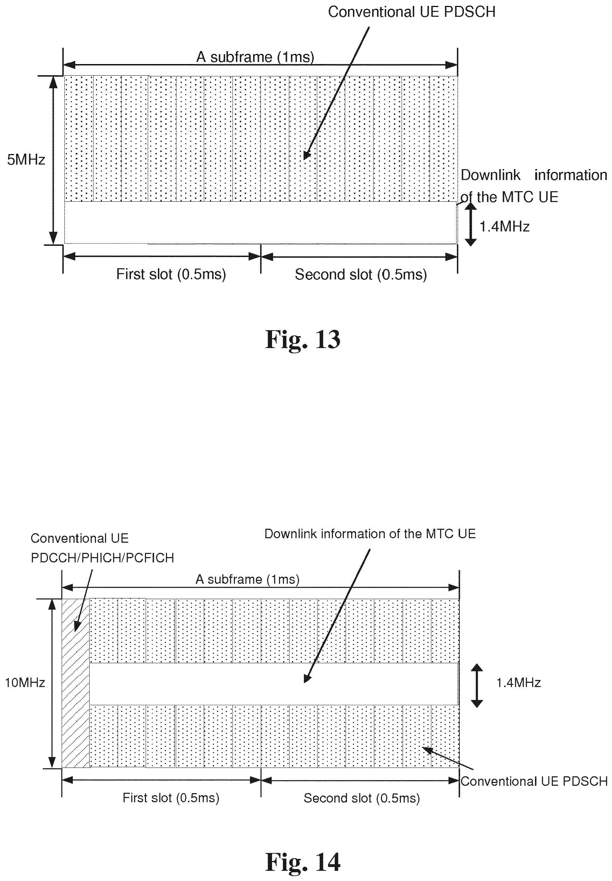

Fig. 13 is a schematic diagram of a time-frequency structure of a downlink subframe according to application example 4 of the present invention;
Fig. 14 is a schematic diagram of a time-frequency structure of a downlink subframe according to application example 5 of the present invention;

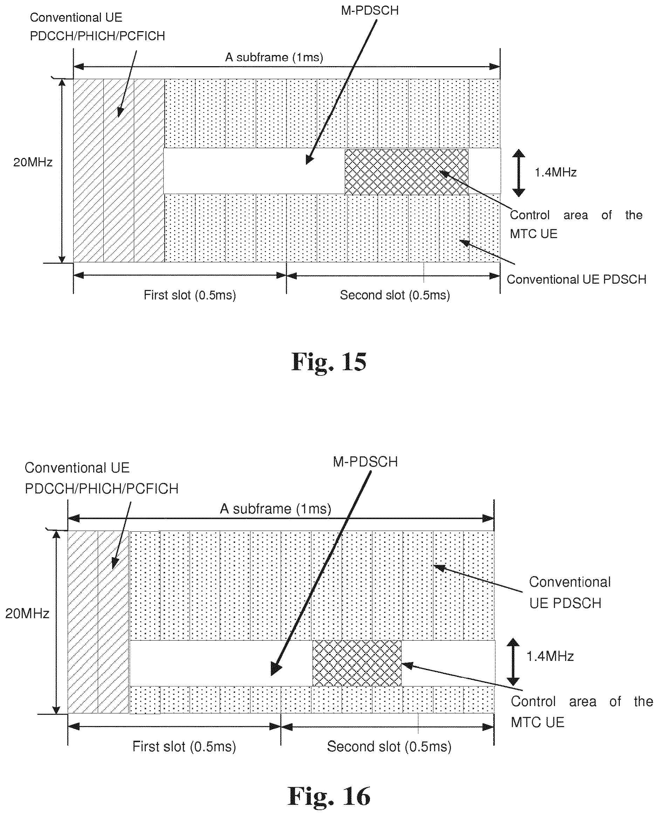

Fig. 15 is a schematic diagram of a time-frequency structure of a downlink subframe according to application example 6 of the present invention;
Fig. 16 is a schematic diagram of a time-frequency structure of a downlink subframe according to application example 7 of the present invention;

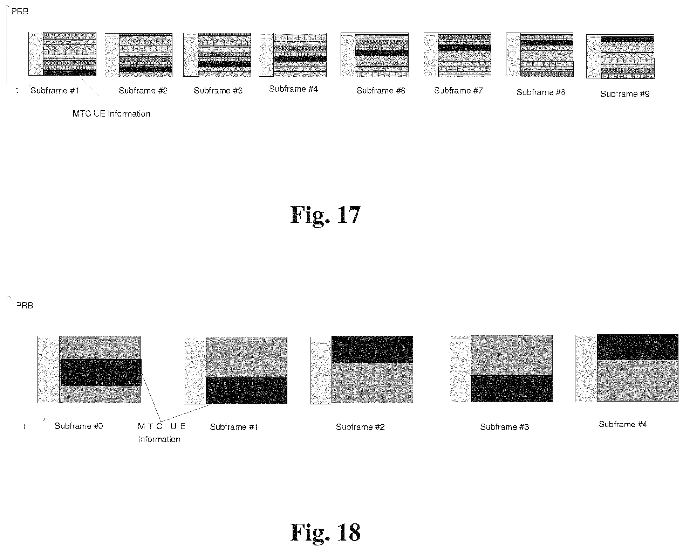

Fig. 17 is a schematic diagram of a frequency hopping structure of a downlink subframe according to application example 8 of the present invention; and
Fig. 18 is a schematic diagram of a frequency hopping structure of a downlink subframe according to application example 9 of the present invention.

## Detailed Description of the Embodiments

The present invention is descried below with reference to the drawings and embodiments in detail. The scope of protection of the invention is solely limited by the appended claims.

The embodiment provides an information transmission method, Fig. 4 is a flowchart of an information transmission method according to an embodiment of the present invention, and as shown in Fig. 4, the method includes the following steps that:

S402: a base station determines that a receiving bandwidth of UE is smaller than a system bandwidth or a component carrier accessed by the UE is of an NCT; and
S404: the base station transmits downlink data to the UE within the receiving bandwidth of the UE according to a preset RF, preset subframes and/or preset time-domain and frequency-domain resources.

By the above-mentioned steps in the embodiment, under the condition that the base station determines that the receiving bandwidth of the UE is smaller than the system bandwidth or the component carrier accessed by the UE is of the NCT, downlink transmission is performed within the receiving bandwidth corresponding to the UE according to the preset RF, the preset subframes and/or the preset time-domain and frequency-domain resources, so that a technical foundation is laid for the downlink data receiving of the UE under the condition that the system bandwidth is more than its own receiving bandwidth, the problem of how to correctly receive downlink information under a downlink narrowband condition in the related art is solved, UE of different types can coexist in a system, and an application range of the system is widened.

In an example embodiment, the UE may include low-cost and bandwidth-limited MTC UE (for example, bandwidth-limited MTC UE with cost lower than a preset value) or bandwidth-limited UE. In such a manner, a technical support is provided for the transfer of an M2M service to a broadband system (for example, an LTE system).

As an example embodiment, the base station may determine the RF, the subframes and/or preset time-domain and frequency-domain resources positions in a presetting (i.e. predefinition) manner, or, the base station may also determine subframe positions and the preset time-domain and frequency-domain resources positions in a manner of transmitting indication information to the UE, wherein the indication information is configured to indicate the preset subframe positions and the preset time-domain and frequency-domain resources positions, or, the base station may also determine one or more of the RF, the subframes and the time-domain and frequency-domain resources according to presetting, and remaining information may be determined according to the indication information which is transmitted to the UE by the base station. In such a manner, the flexibility of the scheme is improved.

In an example embodiment, an initial position of the time-domain resources may be set on the nth OFDM symbol of the downlink subframe, wherein $0 \leq n \leq 5$. In such a manner, a control information area in a conventional LTE system is avoided.

In an example embodiment, for the subframes 0 and 5, the preset time-domain resources positions may also include the OFDM symbols except an SSS, a PSS and a PBCH.

As an example embodiment, the indication information may be transmitted in at least one of manners as follows: bearing on a PBCH; bearing on a public channel of the UE; bearing on a control channel area of the UE after joint coding with control information of the UE; bearing on an ePCFICH after independent coding; and bearing on RRC signalling. In such a manner, the flexibility of a manner of determining the preset RF, the preset subframes and/or the preset time-domain and frequency-domain resources according to the indication information is improved.

In an example embodiment, for the manner of bearing on the public channel, the indication information may be born in a paging MSG in an SIB born on the public channel or in a MSG 2 and a MSG 4 born on the public channel during RA.

In an example embodiment, the ePCFICH may be at one of the following positions in the subframe: the first OFDM symbol of the second slot; the (k+1)th OFDM symbol of the first slot, wherein k is the maximum number of control information symbols corresponding to conventional UE with a receiving bandwidth which is the system bandwidth; and a symbol occupied by a DMRS.

As an example embodiment, for the frequency-domain resources position, the preset frequency-domain resources position may be a central frequency-domain position of the system bandwidth in the subframe; or a central frequency-domain position of the system bandwidth in at least one of FDD-based subframes 0 and 5 and TDD-based subframes 0 and 5 and preset positions of the other subframes in preset subframe positions, wherein the preset positions may be determined by virtue of the indication information or a predefined frequency hopping pattern.

In an example embodiment, for a TDD-based special frame: in a DwPTS subframe, the preset frequency-domain resources position is fixed, or, in TDD-based subframes 1 and 6, the preset frequency-domain resources positions are fixed.

In an example embodiment, the downlink data transmitted within the time-frequency resources of the downlink subframe may include at least one of the following: data born by a PDCCH of the UE, data born by a PCFICH of the UE, data born by a PHICH of the UE, data born by a PDSCH of the UE, data born by an ePDCCH, data born by the ePCFICH and data born by an ePHICH.

In an example embodiment, the PDCCH, PCFICH and PHICH of the UE have structures the same as channel structures of the conventional UE with the receiving bandwidth equal to the system bandwidth, and are positioned within the receiving bandwidth of the UE in S402 in the system bandwidth.

In an example embodiment, an initial position of the time-domain resources of the PDSCH of the UE may be the same as that of the ePDCCH, or may also be indicated by the ePCFICH.

In an example embodiment, the frequency-domain resources position of the PDSCH of the UE may be indicated by the PDCCH or ePDCCH of the UE.

In an example embodiment, the frequency-domain resources position of the ePDCCH may be continuous p PRBs within the receiving bandwidth, p being a positive integer, or a frequency-domain resources position of the ePDCCH is m PRBs on each of two sidebands of the receiving bandwidth respectively, wherein m=p/2, and p is an even number.

In an example embodiment, the PDCCH and PDSCH of the UE are transmitted on different subframes, and the PDCCH schedules the PDSCH in a cross-subframe manner.

In an example embodiment, if the downlink data is the data born by the PDSCH of the UE, during an RACH process or initial access of the UE, the downlink data is selectively transmitted within the preset frequency-domain resources, and then the downlink data of the UE is selectively transmitted within the frequency-domain resources position corresponding to the indication information; or, during the RACH process or initial access of the UE, the downlink data is selectively transmitted within the preset frequency-domain resources, and then the downlink data of the UE is selectively transmitted within the frequency-domain resources position corresponding to the system bandwidth.

In an example embodiment, for the UE with limited coverage, the downlink data is selectively transmitted within the preset frequency-domain resources in all the downlink subframes.

In an example embodiment, the UE with limited coverage is: UE with a repeated transmitting PDCCH or a continuously repeated transmitting PDSCH.

In an example embodiment, the PDSCH scheduled by the PDCCH/ePDCCH is selectively transmitted within the preset frequency-domain resources, wherein the PDCCH/ePDCCH is scrambled by at least one of an SI-RNTI, RA-RNTI, P-RNTI and Temp-C-RNTI.

In an example embodiment, the PDSCH scheduled by the PDCCH/ePDCCH is selectively transmitted within the frequency-domain resources indicated by the signalling, wherein the PDCCH/ePDCCH is scrambled by a C-RNTI, or, the PDSCH scheduled by the PDCCH/ePDCCH is selectively transmitted within the frequency-domain resources corresponding to the system bandwidth, wherein the PDCCH/ePDCCH is scrambled by the C-RNTI.

In an example embodiment, the frequency-domain resources for selective transmission are discrete.

In an example embodiment, the UE includes bandwidth-limited MTC UE with cost lower than a preset value or bandwidth-limited UE.

Corresponding to the information transmission method, the embodiment also provides an information transmission device, which is positioned in a base station and configured to implement the example and the example embodiment, and what has been described will not be repeated. For example, a term "component", used below, is a combination of software and/or hardware for realizing preset functions. The device described in the following embodiment is preferably implemented by software, but the implementation of the device with hardware or the combination of software and hardware is also possible and conceived.

Fig. 5 is a structure diagram of an information transmission device according to an embodiment of the present invention, and as shown in Fig. 5, the device includes: a first determination component 52 and a transmission component 54. Each component is described below in detail.

The first determination component 52 is configured to determine that a receiving bandwidth of a UE is smaller than a system bandwidth or a component carrier accessed by the UE is of an NCT; and the transmission component 54 is coupled with the first determination component 52, and is configured to transmit downlink data to the UE within the receiving bandwidth of the UE according to a preset RF, preset subframes and/or preset time-domain and frequency-domain resources.

By the components in the embodiment, under the condition that the first determination component 52 of the base station determines that the receiving bandwidth of the UE is smaller than the system bandwidth or the component carrier accessed by the UE is of the NCT, the transmission component 54 performs downlink transmission within the receiving bandwidth corresponding to the UE according to the preset RF, the preset subframes and/or the preset time-domain and frequency-domain resources, so that a technical foundation is laid for the downlink data receiving of the UE under the condition that the system bandwidth is greater than its own receiving bandwidth, the problem of how to correctly receive downlink information under a downlink narrowband condition in the related art is solved, UE of different types can coexist in a system, and an application range of the system is widened.

The embodiment also provides another information transmission method, Fig. 6 is a flowchart of another information transmission method according to an embodiment of the present invention, and as shown in Fig. 6, the method includes the following steps that:

S602: UE determines that its own receiving bandwidth is smaller than a system bandwidth or a component carrier accessed by the UE is of an NCT; and
S604: the UE receives downlink data within the receiving bandwidth according to a preset RF, preset subframes and/or time-domain and frequency-domain resources.

By the steps in the embodiment, under the condition that the UE determines that its own receiving bandwidth is smaller than the system bandwidth or the accessed component carrier is of the NCT, the downlink data transmitted by a base station is received within the receiving bandwidth according to the preset RF, the preset subframes and/or the preset time-domain and frequency-domain resources, so that the UE may receive the downlink data under the condition that the system bandwidth is greater than its own receiving bandwidth, the problem of how to correctly receive downlink information under a downlink narrowband condition in the related art is solved, UE of different types can coexist in a system, and an application range of the system is widened.

In an example embodiment, the UE may include low-cost and bandwidth-limited MTC UE. In such a manner, a technical support is provided for the transfer of an M2M service to a broadband system (for example, an LTE system).

As an example embodiment, the UE may determine the RF, the subframes and/or the preset time-domain and frequency-domain resources in a presetting (i.e. predefinition) manner, or, the UE may also determine the RF, the subframes and/or the preset time-domain and frequency-domain resources in a manner of receiving indication information from the base station, wherein the indication information is configured to indicate preset subframe positions and the preset time-domain and frequency-domain resources positions, or, the UE may also determine one or more of the RF, the subframes and the time-domain and frequency-domain resources according to the presetting, and remaining information may be determined according to the indication information which is received from the base station. In such a manner, the flexibility of the scheme is improved.

In an example embodiment, an initial position of the time-domain resources may be set on the nth OFDM symbol of the downlink subframe, wherein $0 \leq n \leq 5$; or, the UE may also detect its own control area in a blind detection manner, and employs the first OFDM symbol outside the control area as the initial position of the time-domain resources.

In an example embodiment, for the subframes 0 and 5, the preset time-domain resources positions may also include the OFDM symbols except an SSS, a PSS and a PBCH.

As an example embodiment, for the frequency-domain resources position, the preset frequency-domain resources position may be a central frequency-domain position of the system bandwidth in the subframe; or a central frequency-domain position of the system bandwidth in at least one of FDD-based subframes 0 and 5 and TDD-based subframes 0 and 5 and preset positions of the other subframes in preset subframe positions, wherein the preset positions may be determined by virtue of the indication information or a predefined frequency hopping pattern.

In an example embodiment, for a TDD-based special frame: in a DwPTS subframe, the preset frequency-domain resources position is fixed.

In an example embodiment, the downlink data transmitted within the time-frequency resources of the downlink subframe may include at least one of the following: data born by a PDCCH of the UE, data born by a PCFICH of the UE, data born by a PHICH of the UE, data born by a PDSCH of the UE, data born by an ePDCCH, data born by an ePCFICH and data born by an ePHICH.

In an example embodiment, the PDCCH, PCFICH and PHICH of the UE have structures the same as channel structures of conventional UE with a receiving bandwidth equal to the system bandwidth, and are positioned within the receiving bandwidth of the UE in S402 in the system bandwidth.

In an example embodiment, the initial position of the time-domain resources of the PDSCH of the UE may be the same as that of the ePDCCH, or may also be indicated by the ePCFICH.

In an example embodiment, the frequency-domain resources position of the PDSCH of the UE may be indicated by the PDCCH or ePDCCH of the UE.

In an example embodiment, the frequency-domain resources position of the ePDCCH may be continuous p PRBs within the receiving bandwidth, p being a positive integer, or a frequency-domain resources position of the ePDCCH is m PRBs on each of two sidebands of the receiving bandwidth respectively, wherein m=p/2, and p is an even number.

In an example embodiment, the PDCCH and PDSCH of the UE are transmitted on different subframes, and the PDCCH schedules the PDSCH in a cross-subframe manner.

In an example embodiment, if the downlink data is the data born by the PDSCH of the UE, during an RACH process or initial access of the UE, the downlink data is selectively transmitted within the preset frequency-domain resources, and then the downlink data of the UE is selectively transmitted within the frequency-domain resources position corresponding to the indication information; or, during the RACH process or initial access of the UE, the downlink data is selectively transmitted within the preset frequency-domain resources, and then the downlink data of the UE is selectively transmitted within the frequency-domain resources position corresponding to the system bandwidth.

In an example embodiment, for the UE with limited coverage, the downlink data is selectively transmitted within the preset frequency-domain resources in all the downlink subframes.

In an example embodiment, the UE with limited coverage is: UE with a repeated transmitting PDCCH or a continuously repeated transmitting PDSCH.

In an example embodiment, the PDSCH scheduled by the PDCCH/ePDCCH is selectively transmitted within the preset frequency-domain resources, wherein the PDCCH/ePDCCH is scrambled by at least one of an SI-RNTI, RA-RNTI, P-RNTI and Temp-C-RNTI.

In an example embodiment, the PDSCH scheduled by the PDCCH/ePDCCH is selectively transmitted within the frequency-domain resources indicated by the signalling, wherein the PDCCH/ePDCCH is scrambled by a C-RNTI, or, the PDSCH scheduled by the PDCCH/ePDCCH is selectively transmitted within the frequency-domain resources corresponding to the system bandwidth, wherein the PDCCH/ePDCCH is scrambled by the C-RNTI.

In an example embodiment, the frequency domain resources for selective transmission are discrete.

Corresponding to the second information transmission method, the embodiment also provides another information transmission device, which is positioned in a UE and configured to implement the example and the example embodiment, and what has been described will not be repeated. For example, a term "component", used below, is a combination of software and/or hardware for realizing preset functions. The device described in the following embodiment is preferably implemented by software, but the implementation of the device with hardware or the combination of software and hardware is also possible and conceived.

Fig. 7 is a structure diagram of another information transmission device according to an embodiment of the present invention, and as shown in Fig. 7, the device includes: a second determination component 72 and a receiving component 74. Each component is described below in detail.

The second determination component 72 is configured to determine that its own receiving bandwidth is smaller than a system bandwidth or an accessed component carrier is of an NCT; and the receiving component 74 is coupled with the second determination component 72, and is configured to receive downlink data within the receiving bandwidth according to a preset RF, preset subframes and/or preset time-domain and frequency-domain resources.

By the components in the embodiment, under the condition that the second determination component 72 of the UE determines that its own receiving bandwidth is smaller than the system bandwidth or the accessed component carrier is of the NCT, the receiving component 74 receives the downlink data from a base station within the receiving bandwidth according to the preset RF, the preset subframes and/or the preset time-domain and frequency-domain resources, so that a technical foundation is laid for the downlink data receiving of the UE under the condition that the system bandwidth is greater than its own receiving bandwidth, the problem of how to correctly receive downlink information under a downlink narrowband condition in the related art is solved, UE of different types can coexist in a system, and an application range of the system is widened.

Description is given below with reference to example embodiments, and the following example embodiments combine the above embodiments and their preferred implementation modes.

In the following example embodiments, a corresponding design scheme is provided for time-domain and frequency-domain positions in downlink subframes under a narrowband and broadband coexisting condition, and the narrowband MTE UE is ensured to successfully receive the downlink data and seamlessly access an LTE network system.

In the following example embodiments, in order to promote the evolution of the M2M service from a GSM to the LTE system, a downlink information transmission method, i.e. a method of determining downlink time-frequency resources positions for narrowband UE in a broadband system, is proposed, to ensure the UE can correctly receive the downlink data.

The downlink information transmission method can include that: when the system bandwidth is greater than a predefined bandwidth of the UE, the UE determines the number of an RF where the downlink information of the UE is located, the number of subframes in the RF and time-domain and frequency-domain resources positions of the corresponding subframes according to predefinition and signalling transmitted by the base station, and receives the downlink data within the predefined bandwidth of the UE corresponding to the corresponding subframes.

In an example embodiment, when the system bandwidth is smaller than or equal to the predefined bandwidth of the UE, the UE may receive the downlink data within the system bandwidth;

in an example embodiment, a PDCCH, a PCFICH, a PHICH and a PDSCH or an ePDCCH, an ePCFICH, an ePHICH and the PDSCH of the UE are transmitted by the time-frequency resources of the downlink subframes; and

in an example embodiment, the UE may receive the downlink data within the predefined bandwidth on the time-frequency resources of all or part of the subframes according to predefinition or signalling indication.

Manners for determining the time-domain resources positions of the downlink subframes of the UE may include one of the following:

Manner 1: the UE predefines that an initial position of the time-domain resources of the subframe is determined from the nth OFDM symbol of the subframe, wherein $1 \leq n \leq 4$;

Manner 2: the UE determines the initial positions of the time-domain resources by receiving the signalling indication transmitted from the base station;

in an example embodiment, the signalling indication is born by the PBCH, or is born by a dedicated public channel of the UE;

or, in an example embodiment, the base station bears the signalling indication in the control channel area of the UE in a manner of joint coding with the control information of the UE;

or, the signalling indication is independently coded and born on the ePCFICH;

in an example embodiment, the ePCFICH is positioned on the first OFDM symbol of the second slot of the subframe or the (k+1)th OFDM symbol of the first slot, and k is the number of control information symbols of the conventional UE;

or, the ePCFICH is positioned on the symbol occupied by the DMRS;

Manner 3: the UE determines the initial positions of the time-domain resources of its own corresponding subframes by blindly detecting its own control area;

at this moment, the control area of the UE is positioned in the second slot of the subframe; and

in an example embodiment, the time-domain resources are the OFDM symbols except the control area of the conventional UE, the SSS, the PSS and the PBCH.

The positions of the frequency-domain resources of the corresponding downlink subframes of the UE are determined in one of manners as follows:

Manner 1: the UE determines the frequency-domain position of the subframe as the central frequency-domain position of the system bandwidth in the predefinition manner;

Manner 2: the frequency-domain position of the UE in at least one of the FDD-based subframes 0 and 5 and the TDD-based subframes 0 and 5 is fixed to be the central frequency-domain position of the system bandwidth, and the positions of the other downlink subframes are determined according to the signalling indication or the predefined frequency hopping pattern;

in an example embodiment, the signalling indication is born by the PBCH, or is born by the dedicated public channel of the UE;

in an example embodiment, the frequency-domain position of the UE in the TDD-based special subframe DwPTS is fixed, or, in the TDD-based subframes 1 and 6, the preset frequency-domain resources positions are fixed;

in an example embodiment, the frequency-domain position of the PDSCH of the UE is indicated by the PDCCH or ePDCCH of the UE;

in an example embodiment, the frequency-domain position of the ePDCCH is predefined to include m PRBs on each of the two sidebands of a narrowband, or continuous k PRBs of the narrowband; and

in an example embodiment, the PDCCH and PDSCH of the UE are transmitted on different subframes, and the PDCCH schedules the PDSCH in the cross-subframe manner.

Moreover, when the downlink data is the data born by the PDSCH of the UE, the frequency-domain position of the downlink information in the subframe is determined in different frequency-domain position determination manners according to different network access time buckets of the UE.

During the RACH process or initial access of the UE, the downlink data is selectively transmitted within the preset frequency-domain resources, and then the downlink data of the UE is selectively transmitted within the frequency-domain resources position corresponding to the indication information; or, during the RACH process or initial access of the UE, the downlink data is selectively transmitted within the preset frequency-domain resources, and then the downlink data of the UE is selectively transmitted within the frequency-domain resources position corresponding to the system bandwidth.

In an example embodiment, for the UE with limited coverage, the downlink data is selectively transmitted within the preset frequency-domain resources in all the downlink subframes.

In an example embodiment, the UE with limited coverage is: UE with a repeated transmitting PDCCH or a continuously repeated transmitting PDSCH.

In an example embodiment, the PDSCH scheduled by the PDCCH/ePDCCH is selectively transmitted within the preset frequency-domain resources, wherein the PDCCH/ePDCCH is scrambled by at least one of an SI-RNTI, RA-RNTI, P-RNTI and Temp-C-RNTI.

In an example embodiment, the PDSCH scheduled by the PDCCH/ePDCCH is selectively transmitted within the frequency-domain resources indicated by the signalling, wherein the PDCCH/ePDCCH is scrambled by a C-RNTI, or, the PDSCH scheduled by the PDCCH/ePDCCH is selectively transmitted within the frequency-domain resources corresponding to the system bandwidth, wherein the PDCCH/ePDCCH is scrambled by the C-RNTI.

In an example embodiment, the frequency-domain resources for selective transmission are discrete.

In an example embodiment, the UE may detect and receive downlink information such as downlink control information and downlink service information only on time-frequency resources of the corresponding subframes bearing the downlink information of the UE.

In an example embodiment, the UE includes low-cost and bandwidth-limited MTC UE or bandwidth-limited UE.

The method is applicable to LTE UE, particularly to MTC UE. By using the method disclosed by the following example embodiments, the equipment cost of the LTE UE can be greatly lowered on the basis of no influence on the performance of the LTE system. In addition, the problem of how to coexist in a channel for the bandwidth-limited MTC UE and a broadband UE can also be solved, the narrowband MTC UE can be ensured to successfully receive the downlink data, the evolution of an MTC service from the GSM to the LTE system is promoted and the original spectral efficiency can be improved.

A downlink narrowband time-frequency resources determination method is further described below with reference to the drawings, specific embodiments and application examples in detail.

Embodiment 1

The embodiment describes a transmission method for the downlink information of narrowband UE on a base station side. Fig. 8 is a flowchart of downlink information transmission on a base station side according to embodiment 1 of the present invention, and as shown in Fig. 8, the flow includes the following steps that:

S802: a base station (such as an Evolved Node B (eNodeB)), when transmitting a downlink physical channel of UE, maps the downlink information of the UE to a corresponding time-frequency domain position within a predefined bandwidth of a configuration subframe of the UE;

in an example embodiment, the UE may include MTC UE, such as low-cost bandwidth-limited MTC UE or bandwidth-limited UE.

in an example embodiment, the UE predefines a supported system bandwidth to be 1.4MHz, 3MHz or 5MHz; and in an example embodiment, when the eNodeB transmits the downlink physical channel of the UE, the system bandwidth is judged whether to be more than the predefined bandwidth of the UE or not, and the downlink physical channel of the UE is mapped to the time-frequency domain position of the predefined bandwidth of the UE in the configured subframe if the system bandwidth is determined to be more than the predefined bandwidth of the UE; and if the system bandwidth is determined not to be more than (smaller than or equal to) the predefined bandwidth of the UE, the downlink physical channel of the UE is transmitted according to the related art.

In an example embodiment, the downlink physical channel includes a PDCCH, a PCFICH, a PHICH and a PDSCH, or an ePDCCH, an ePCFICH, an ePHICH and the PDSCH, or at least one of the PDCCH, PCFICH, PHICH, ePDCCH and PDSCH of the UE; and

the base station probably transmits the downlink information of the UE on all the subframes, and may also transmit the downlink information of the UE on some subframes, and a specific configuration is notified to the UE in a predefinition manner or a signalling indication manner.

In an example embodiment, the signalling indication may bear the subframe configuration information of the subframe through a PBCH on the subframe 0.

The base station may determine the position of a specific time-domain resources of a corresponding subframe of the UE in manners as follows:

Manner 1: the position is predefined to start from the nth OFDM symbol configured to the subframe of the UE, wherein $1 \leq n \leq 4$ ;

Manner 2: the base station notifies the initial position of the specific time-domain resources of the configured subframe of the UE in a signalling indication manner;

in an example embodiment, the base station may bear the signalling on the PBCH and notify the signalling to the UE;

or, the signalling and the control information of the UE are born in a control area of the UE in a joint coding manner; or, the signalling is independently coded and born on the ePCFICH.

Manner 3: the base station implicitly indicate the initial position of the time-domain resources of the UE by virtue of the configured position of the control area of the UE in the subframe; and

at this moment, an initial symbol of the narrowband UE is close to the control area of the conventional UE so that resources waste is avoided.

For example, the number of the symbols occupied by the control area of the conventional UE is implicitly mapped by virtue of the offset of the control area of the UE relative to the second slot or the number of the symbols occupied by the control information of the UE.

In an example embodiment, the time-domain position includes the remaining OFDM symbols, except the control area of the conventional UE, an SSS, a PSS and a PBCH, of the configured subframe.

Manners of determining the frequency-domain resources position of the downlink subframe of the UE may include one of the following:

Manner 1: the base station predefines the frequency-domain resources of the UE to be fixed at the central frequency-domain position of the system bandwidth in the configuration subframe;

Manner 2: the frequency-domain position of the UE in at least one of the FDD-based subframes 0 and 5 and the TDD-based subframes 0 and 5 is fixed to be the central frequency-domain position of the system bandwidth, and the frequency-domain positions of the other configured downlink subframes are determined according to the signalling indication or the predefined frequency hopping pattern;

in an example embodiment, the base station bears the signalling on the PBCH and notifies the signalling to the UE;

in an example embodiment, the frequency-domain position in the TDD-based special subframe DwPTS is fixed, or, in the TDD-based subframes 1 and 6, the preset frequency-domain resources positions are fixed; and

S804: the eNodeB bears the downlink information of the UE on the downlink physical channel of the configuration subframe, and transmits the downlink information.

Embodiment 2:

The embodiment describes a specific process of a narrowband downlink information receiving method on a UE side, Fig. 9 is a flowchart of downlink information receiving on an MTC UE side according to embodiment 2 of the present invention, and as shown in Fig. 9, the flow includes the following steps that:

S902: UE judges whether a system bandwidth is more than its own predefined bandwidth or not, executes S904 if the system bandwidth is more than its own predefined bandwidth, otherwise executes S906;

in an example embodiment, the UE judges whether the system bandwidth is more than its own predefined bandwidth or not by receiving system bandwidth information born by a PBCH on a subframe 0.

S904: the UE receives a downlink physical channel within the whole system bandwidth according to the related art.

Here, the predefined bandwidth of the UE is supposed to be smaller than the system bandwidth;

in an example embodiment, the UE may include MTC UE, and the UE predefines a supported system bandwidth to be 1.4MHz, 3MHz or 5MHz; and

then the UE learns about which subframes of the frame include the downlink information of the UE in a predefinition manner or according to the signalling indication in the PBCH.

S906: the UE detects and receives the downlink physical channel within its own bandwidth at the time-frequency domain position on the subframe including the downlink information of the UE.

In an example embodiment, the downlink physical channel includes a PDCCH, a PCFICH, a PHICH and a PDSCH, or an ePDCCH, an ePCFICH, an ePHICH and the PDSCH, or at least one of the PDCCH, PCFICH, PHICH, ePDCCH and PDSCH of the UE.

Determination manners for the time-domain resources of the configuration subframe of the UE may include:

Manner 1: the time-domain resources of the UE are predefined to start from the nth OFDM symbol of the configuration subframe, wherein $1 \le n \le 4$;

Manner 2: the UE determines a specific time-domain position by receiving the signalling indication transmitted by the base station;

in an example embodiment,

the UE acquires its own time-domain position configuration information by receiving the PBCH; or by decoding its own control information; or decoding the ePCFICH; and

in an example embodiment, the UE detects blindly its own control information on the allocated subframe initially, and decodes and obtains the CFI information of the conventional UE, thereby obtaining the number of the OFDM symbols occupied by the control area of the conventional UE, and then receives its own downlink information from the next symbol.

Manner 3: the time-domain resources of the UE are determined by detecting blindly an area occupied by the control information of the UE.

In an example embodiment, for example, the UE starts to detect blindly its own DCI information from the second slot of the configuration subframe. The UE implicitly obtains the number of the symbols occupied by the control area of the conventional UE by virtue of the obtained number of the offset symbols, wherein the obtained number of the offset symbols is the offset symbols number of the control area relative to the initial position of the second slot or the number of the symbols occupied by the DCI.

In an example embodiment, the time-domain position of the UE on the configuration subframe includes the remaining OFDM symbols except the control area of the conventional UE, an SSS, a PSS and a PBCH.

Manners of determining the frequency-domain resources position of the downlink subframe of the UE include one of the following:

Manner 1: the frequency-domain resources position is predefined to be fixed at the central frequency-domain position of the system bandwidth.

Manner 2: the frequency-domain resources position is fixed to be the central frequency-domain position of the system bandwidth in the FDD-based subframes 0 and 5 and the TDD-based subframes 0 and 5, and the positions of the other downlink subframes are determined according to signalling indication or the predefined frequency hopping pattern;

in an example embodiment, the UE acquires the configuration subframe frequency-domain resources signalling of the base station by reading the PBCH;

In an example embodiment, the frequency-domain position in the TDD-based special subframe DwPTS is fixed, or, the preset frequency-domain resources positions in the TDD-based subframes 1 and 6 are fixed; and

in an example embodiment, the frequency-domain position of the PDSCH of the UE is indicated by the PDCCH or the ePDCCH.

The method of the embodiment is described below by multiple application examples.

Description is given by taking the bandwidth-limited MTC UE as an example, and the receiving and transmission bandwidth of the MTC UE can be set to be a narrowband supported by the LTE system, such as 1.4MHz, 3MHz or 5MHz. In addition, in order to make a distinction with the conventional UE, related channels of the MTC UE are identified as M-PDCCH, M-PCFICH, M-PHICH and M-PDSCH.

Application example 1:

The application example describes a condition of an FDD-based system subframe 0, the subframe may include or not include the dedicated downlink control and service information of the MTC UE, and the configuration information is notified to the UE in a predefinition or signalling notification manner. Here, the condition only included the M-PDSCH of the MTC UE is taken as an example for example description.

Fig. 10 is a schematic diagram of a time-frequency structure of a downlink subframe according to application example 1 of the present invention, then the channel structure of the subframe 0 is as shown in Fig. 10, and the system bandwidth is supposed to be 10MHz:

frequency-domain resources of the M-PDSCH of the MTC UE are the middle 6 PRBs of the system bandwidth. Time-domain resources of the M-PDSCH of the MTC UE are the remaining OFDM symbols except the PBCH, the SSS and the PSS starting from the fourth OFDM symbol.

At this moment, the M-PDSCH may be scheduled by a PDCCH or an ePDCCH of the MTC UE of the other subframes in a cross-subframe scheduling manner. Or, the MTC UE directly detects blindly its own M-PDSCH data.

During the reception of the MTC UE, the PBCH on the middle 6 PRBs of the system bandwidth is read to obtain the system bandwidth, possible subframe information and time-frequency resources position information at first, then its own predefined bandwidth of the MTC UE is compared with the obtained system bandwidth information, the predefined bandwidth of the MTC UE is obviously smaller than the system bandwidth here. The downlink data is received on the time-frequency resources of the corresponding subframes in a predefinition manner or according to signalling information.

Application example 2:

The application example describes a condition of an FDD-based system subframe 5. The subframe may include or not include the dedicated downlink control and service information of the MTC UE, and the related configuration information is notified to the UE in a predefinition or signalling notification manner. The condition included all the control and service information of the MTC UE is taken as an example for description. That is, channels of the UE include the M-PDCCH, M-PCFICH, M-PHICH and M-PDSCH at this moment. Moreover, the frequency-domain position of the M-PDSCH of each piece of UE is indicated by the M-PDCCH on the subframe.

Fig. 11 is a schematic diagram of a time-frequency structure of a downlink subframe according to application example 2 of the present invention, the channel structure of the subframe 5 is as shown in Fig. 11, and the system bandwidth is still supposed to be 10MHz:

the frequency-domain resources of the MTC UE are the middle 6 PRBs of the system bandwidth, and the time-domain resources of the MTC are the remaining OFDM symbols except the SSS and the PSS starting from the third OFDM symbol.

The UE may obtain the channel information in a predefinition manner or by virtue of signalling indication transmitted by the base station, and then receive the downlink data at the corresponding time-frequency position of the subframe.

Application example 3:

The application example describes the condition that the downlink system bandwidth is 10MHz and the maximum receiving bandwidth of the MTC UE is 1.4MHz and includes 6 PRBs. Moreover, the downlink subframes configured to the MTC UE and the time-frequency domain positions on the subframes are determined in a predefined manner.

For example, the downlink information of the MTC UE is predefined to be transmitted only on even or odd subframes. The initial position of the time-domain resources on the specific subframe is predefined to start from the fourth OFDM symbol of the configuration subframe and the frequency-domain resources are predefined on the central 6 PRBs of the system bandwidth. Fig. 12 is a schematic diagram of a time-frequency structure of a downlink subframe according to an application example 3 of the present invention, the specific resources position is as shown in Fig. 12, and the channel structure of the UE includes the M-PDCCH, M-PCFICH, M-PHICH and M-PDSCH.

At a transmitting end, the base station compares the system bandwidth with the predefined bandwidth of the MTC UE; the system bandwidth is more than the predefined bandwidth of the MTC UE here. Then dedicated narrowband time-frequency domain resources mapping is performed on the downlink information of the MTC UE in the predefinition manner and a downlink signal is transmitted.

At a receiving end, after reading the system bandwidth in the PBCH, the MTC UE compares the system bandwidth with its own predefined bandwidth, and the system bandwidth is obviously more than the predefined bandwidth here. Then the MTC UE sequentially receives the M-PCFICH and the M-PHICH from the predefined middle 6 PRBs of the fourth OFDM symbol of the system bandwidth of the downlink subframe in the predefinition manner and blindly detects its own M-PDCCH. The MTC UE decodes and receives the corresponding M-PDSCH to finish correctly receiving the narrowband downlink channel according to the DCI detected blindly.

Application example 4:

The application example describes the condition that the system bandwidth is 5MHz and the transmission and receiving bandwidth of the MTC UE is 1.4MHz and includes 6 PRBs. The specific time-frequency resources position of the downlink subframe of the MTC UE is born in a reserved bit in the PBCH of the subframe 0. The downlink subframes in the example are the subframes configured to transmit the dedicated downlink information of the MTC UE except subframes 0 and 5.

The channel structure of the UE still includes the M-PDCCH, M-PCFICH, M-PHICH and M-PDSCH.

Fig. 13 is a schematic diagram of a time-frequency structure of a downlink subframe according to an application example of the present invention. The base station compares the system bandwidth with the predefined bandwidth of the MTC UE when transmitting the subframe, the system bandwidth is obviously more than the predefined bandwidth here. Then the downlink information of the MTC UE is mapped to the time-frequency domain resources as shown in Fig. 13. In a scenario that a carrier is supposed to be of an NCT, the time-domain position of the MTC UE may be configured from the first OFDM symbol and the frequency-domain position of the MTC UE is configured to include continuous 6 PRBs on an edge of the system bandwidth. Moreover, the base station bears the position information on the PBCH and notifies the UE of the position information in the subframe 0.

In an example embodiment, for the frequency-domain position of the subframe, the base station may notify the UE of the upward or downward offset of the central frequency point of the MTC UE bandwidth relative to the central frequency point of the system bandwidth.

At the receiving end, the MTC UE decodes the PBCH at the fixed central position of the subframe 0, reads the system bandwidth in the PBCH, the subframes with its own downlink information and the subframe time-frequency resources configuration information. Then the MTC UE finds its own frequency point according to the given frequency-domain offset and the detection of the downlink physical channel is performed in the 6 PRBs on the edge of the system bandwidth in the corresponding configured subframes. Information within the bandwidth predefined by the MTC UE is filtered to finish the narrowband interception and downlink information receiving of the MTC UE.

Application example 5:

The application example describes the condition that the downlink system bandwidth is 10MHz and the maximum receiving bandwidth of the MTC UE is 1.4MHz and includes 6 PRBs. The subframes are corresponding subframes configured to transmit the dedicated downlink information of the MTC UE by the base station. The initial position of the downlink time-domain resources of the MTC UE is close to the control symbol of the conventional UE, and the frequency-domain resources are predefined to be the middle 6 PRBs.

Fig. 14 is a schematic diagram of a time-frequency structure of a downlink subframe according to an application example of the present invention. In an example embodiment, the positions, configured by the base station, of the narrowband time-frequency domain subframes of the MTC UE are as shown in Fig. 14. Here the CFI of the conventional UE is supposed to be 1, that is, the control area only occupies one OFDM symbol, and the base station maps the downlink information of the MTC UE to the middle 6 PRBs of the remaining symbols from the second symbol. Moreover, the information that the CFI of the conventional UE is 1 and the control information of the UE are born in the narrowband in a joint coding manner;

or, the base station may independently code the CFI information of the conventional UE on the ePCFISH of the PDSCH area of the conventional UE. The ePCFICH area is positioned on the first OFDM symbol of the second slot of the subframe or the second OFDM symbol of the first slot, or the ePCFICH is positioned on a symbol occupied by the DMRS. During the demodulation of the ePCFICH according to the DMRS, the ePCFICH may be mapped to 4 PRBs, each PRB corresponds to 4 Resource Elements (REs), wherein two REs correspond to one port, and the other two REs correspond to the other port, or the ePCFICH may be mapped to 2 PRBs, and each PRB corresponds to 8 REs, wherein 4 REs correspond to one port, and the other 4 REs correspond to the other port. During the demodulation of the ePCFICH according to a Cell Reference Signal (CRS), a conventional PCFICH frequency-domain mapping manner is adopted.

The frequency-domain position is within a narrowband receiving range.

At the receiving end, the MTC UE compares the system bandwidth with its own predefined bandwidth after reading the system bandwidth in the PBCH, and the system bandwidth is obviously greater than the predefined bandwidth here. Then a process of intercepting the 1.4MHz system bandwidth of each subframe configured by the MTC UE and detecting and receiving the downlink physical channel is specifically as follows:

the MTC UE blindly detects its own control area in the middle 6 PRBs of the system bandwidth of the configuration subframe, decodes the control information to obtain the CFI information of the conventional UE or decodes the ePCFICH to directly obtain the CFI information of the conventional UE, thereby learning about that only one OFDM symbol is occupied by the control channel of the conventional UE. Then the MTC UE receives the downlink information from the second OFDM symbol to finish correctly receiving the narrowband downlink physical channel.

Application example 6:

The application example describes the condition that the downlink system bandwidth is 20MHz and the maximum receiving bandwidth of the MTC UE is 1.4MHz and includes 6 PRBs. The subframes are corresponding subframes configured to transmit the dedicated downlink information of the MTC UE by the base station except the subframe 0 and the subframe 5. The initial position of the downlink time-domain resources of the narrowband MTC UE is close to the control symbol of the conventional UE, the number of the symbols occupied by the control area of the conventional UE is supposed to be 3, that is, CFI=3, and the frequency-domain resources are notified by signalling born by the PBCH.

Fig. 15 is a schematic diagram of a time-frequency structure of a downlink subframe according to application example 6 of the present invention, and a specific downlink subframe channel structure is as shown in Fig. 15. At this moment, channels of the UE include the M-PDCCH, the M-PCFICH, the M-PHICH and the M-PDSCH. The control area is positioned on the second slot of the configured subframe. The frequency-domain position of the M-PDSCH of each piece of UE is specifically indicated by the M-PDCCH on the subframe. The MTC UE determines the initial time-domain position of the narrowband according to the detected offset of the control area of the MTC UE relative to the second slot.

A downlink information transmission process of the narrowband MTC UE is as follows:

at the transmitting end, the base station compares the system bandwidth with the predefined bandwidth of the MTC UE at first, the system bandwidth is obviously more than the predefined bandwidth here, then the downlink information of the MTC UE is mapped to the time-frequency position as shown in Fig. 15, and the frequency-domain position is notified to the MTC UE by virtue of signalling born on the PBCH.

At the receiving end, the MTC UE compares the system bandwidth with its own predefined bandwidth after reading the system bandwidth and the signalling in the PBCH in the subframe 0, and the system bandwidth is obviously more than the predefined bandwidth. Then a subsequent process of intercepting the 1.4MHz narrowband on the subframe configured by the MTC UE and detecting and receiving the downlink physical channel is specifically as follows:

the MTC UE blindly detects its own control area at the corresponding frequency-domain position of the downlink system bandwidth according to the signalling indication in the PBCH, and then implies a value of a CFI of OL UE at the initial position of the second slot according to the control area detected blindly, thereby determining the time-domain position of the M-PDSCH of the MTC UE.

In an example embodiment, the UE blindly detects its own control information from the second slot of the downlink subframe. If blindly detecting that the control information starts from the first symbol of the second slot, the UE implies that the CFI of the OL UE is 1, and receives its own M-PDSCH from the position of the second OFDM symbol of the subframe, and so on. If blindly detecting that the control information starts from the second symbol of the second slot, the UE implies that the CFI of the OL UE is 2, and receives its own M-PDSCH from the position of the third OFDM symbol of the subframe. Here, the UE blindly detects that its own control area starts from the third symbol of the second slot and receives its own M-PDSCH from the position of the fourth OFDM symbol of the subframe.

In the above manner, the MTC UE finishes correctly receiving the narrowband downlink physical channel under a broadband condition.

Application example 7:

The application example describes the condition that the downlink system bandwidth is 20MHz and the maximum receiving bandwidth of the MTC UE is 1.4MHz and includes 6 PRBs. The subframes are corresponding subframes configured to transmit the dedicated downlink information of the MTC UE by the base station. The initial position of the downlink time-domain resources of the narrowband MTC UE is close to the control symbol of the conventional UE, and the frequency-domain resources are notified by virtue of the signalling born by the PBCH. The MTC UE determines the initial position of the time-domain resources of the small bandwidth by virtue of a mapping relationship between the number, obtained by blind detection, of the OFDM symbols occupied by the control area of the UE and the CFI information of the conventional UE.

At this moment, channels of the UE include the M-PDCCH, the M-PCFICH, the M-PHICH and the M-PDSCH. The control area is positioned on the second slot of the configuration subframe. The frequency-domain position of the M-PDSCH of each piece of UE is specifically indicated by the M-PDCCH on the subframe.

In an example embodiment, table 1 is a corresponding relationship between the number of the symbols occupied by the control area in application example 7 and the CFI values. The mapping relationship between the number of the symbols occupied by the control information of the MTC UE and the CFI information of the conventional UE is predefined as table 1:

Table 1

| The number of the symbols occupied by the control area of the MTC UE | CFI values of the OL UE |
|---|---|
| 1 | 0 |
| 2 | 1 |
| 3 | 2 |
| 4 | 3 |
| 5 | 4 |

Fig. 16 is a schematic diagram of a time-frequency structure of a downlink subframe of an application example 7 of the present invention, the number of the symbols occupied by the control area of the conventional UE is supposed to be 3 here, that is, CFI=2, and the channel structure of the downlink subframe is specifically as shown in Fig. 16.

A downlink information transmission process of the broadband MTC UE is as follows:

at the transmitting end, the base station compares the system bandwidth with the predefined bandwidth of the MTC UE, the system bandwidth is obviously more than the predefined bandwidth, then the downlink information of the MTC UE is mapped to the time-frequency position as shown in Fig. 16, and the corresponding frequency-domain position on the configuration subframe is notified to the MTC UE by virtue of the signalling born on the PBCH.

At the receiving end, the MTC UE compares the system bandwidth with its own predefined bandwidth after reading the system bandwidth and the frequency-domain indication signalling in the PBCH, and the system bandwidth is obviously more than the predefined bandwidth here. Then a process of intercepting the 1.4MHz narrowband of the MTC UE and detecting and receiving the downlink physical channel is specifically as follows:

at first, the MTC UE blindly detects its own control area from the second slot in the time domain of the subsequent corresponding configuration subframe, and the MTC UE blindly detects its own control area in accordance with the corresponding frequency-domain position of the downlink system bandwidth indicated by the signalling in the PBCH. Here, the number, obtained by the blind detection of the MTC UE, of the OFDM symbols occupied by the control area is 3, the value of the CFI of the OL UE is determined to be 2 according to the predefined mapping relationship in table 1, and then the MTC UE receives its own M-PDSCH from the third OFDM symbol of the configuration subframe.

In the above manner, the MTC UE finishes correctly receiving the narrowband downlink physical channel under the broadband condition.

Application example 8:

The application example describes the condition that the downlink system bandwidth is 10MHz and the maximum receiving bandwidth of the MTC UE is 1.4MHz and includes 6 PRBs. The downlink physical channels of the MTC UE include the ePDCCH, the ePCFICH, the ePHICH and the M-PDSCH, the frequency-domain position of the e-PDCCH in the narrowband is that two PRBs are on sidebands and four PRBs forming the M-PDSCH area are the middle. The frequency-domain positions of the subframes 0 and 5 in the whole narrowband are the fixed middle 6 PRBs, and the frequency-domain resources of each of the other subframes are determined according to the predefined frequency hopping pattern.

Fig. 17 is a schematic diagram of a frequency hopping structure of a downlink subframe according to application example 8 of the present invention, and the frequency hopping pattern of the former 10 subframes is as shown in Fig. 17.

Here, the 10M bandwidth can be multiplexed by N pieces of MTC UE and every 6 continuous PRBs have a number index. The used numbers are notified to the UE by virtue of high-level signalling so that the frequency hopping pattern of each subframe is specifically determined. The base station needs to reserve the frequency-domain resources for the MTC UE. When there is no MTC UE using the frequency-domain resources, the OL UE may be scheduled on the frequency-domain resources.

Downlink information transmission and receiving processes of the narrowband UE are specifically as follows: at the transmitting end, the base station compares the system bandwidth with the predefined bandwidth of the MTC UE; the system bandwidth is obviously more than the predefined bandwidth here. During the mapping of each subframe, the downlink information of the MTC UE in the subframes 0 and 5 is mapped to the middle fixed 6 PRBs of the system bandwidth and the downlink information of the MTC UE in the other subframes is mapped to the corresponding time-frequency positions according to the frequency hopping pattern as shown in Fig. 17, and a used frequency hopping group number is notified to the MTC UE by virtue of high-level signalling born on the PBCH.

At the receiving end, the MTC UE reads the system bandwidth and the subframe numbers in the PBCH, and compares the system bandwidth with its own predefined bandwidth, the system bandwidth is obviously more than the predefined bandwidth here. The subframes are judged whether to be the subframes 0 and 5 or not, the downlink channel is received on the middle 6 PRBs of the system bandwidth if the subframes are the subframes 0 and 5, and if the subframes are not the subframes 0 and 5, the downlink data is received from the corresponding frequency-domain positions according to the predefined frequency hopping pattern to finish correctly receiving the narrowband downlink channel.

Application example 9:

The application example describes the condition that the downlink system bandwidth is 3MHz and the maximum receiving bandwidth of the MTC UE is 1.4MHz and includes 6 PRBs. The physical channels ePDCCH, ePCFICH, ePHICH and M-PDSCH are included in the system bandwidth of the MTC UE, and the frequency-domain position of the ePDCCH in the narrowband is continuous 2 PRBs in the narrowband or the PRBs of the two sidebands of the narrowband.

Fig. 18 is a schematic diagram of a frequency hopping structure of a downlink subframe according to application example 9 of the present invention. As shown in Fig. 18, the frequency-domain positions of the subframes 0 and 5 configured by the base station in the whole narrowband are the middle fixed 6 PRBs of the system bandwidth, and the frequency-domain resources of the corresponding subframes configured to transmit the dedicated downlink information of the MTC UE by the base station are determined according to the predefined frequency hopping pattern. The time-domain resources may start from the predefined symbols, and may also be determined according to signalling indication.

In an example embodiment, the frequency-domain position of the MTC UE is on the two sidebands of the system bandwidth, and each subframe is placed on the upper or lower sideband in turn. Here, the condition that each subframe includes the downlink information of the MTC UE is taken as an example for description.

Downlink information transmission and receiving processes of the narrowband UE are specifically as follows: at the transmitting end, the base station compares the system bandwidth with the predefined bandwidth of the MTC UE, the system bandwidth is obviously more than the predefined bandwidth here. During the mapping of each subframe, the downlink information of the MTC UE in the subframes 0 and 5 is mapped to the middle fixed 6 PRBs of the system bandwidth and the downlink information of the MTC UE in the other subframes is mapped to the time-frequency positions of the corresponding subframes configured by the base station according to the frequency hopping pattern as shown in Fig. 18.

At the receiving end, the MTC UE reads the system bandwidth and the subframe configuration information in the PBCH of the subframe 0, and compares the system bandwidth with its own predefined bandwidth; the system bandwidth is obviously more than the predefined bandwidth here. The subframes are judged whether to be the subframes 0 and 5 or not, the downlink channel is received on the middle 6 PRBs of the system bandwidth if the subframes are the subframes 0 and 5, and if the subframes are not the subframes 0 and 5, the predefined narrowbands are intercepted at the upper and lower edge positions of the system bandwidth of the configuration subframes according to the predefined frequency hopping pattern in turn to finish correctly receiving the narrowband downlink channel.

Application example 10:

The application example describes the condition of whether the base station configures the information of the MTC UE in the subframe or not. In an example embodiment, only some predefined subframes include the related downlink information of the MTC UE.

For example, only the odd subframes 1, 3, 5 and 7, or the even subframes 2, 4, 6 and 8 or part of the subframes 0-9 are predefined to include the related downlink control and service information of the MTC UE, and the other subframes do not include the related downlink control and service information of the MTC UE.

Therefore, during resources mapping, the base station needs to place the related information of the MTC UE on the predefined subframes. When receiving, the MTC UE only blindly detects its own control information on the predefined subframes and receives the downlink control and service data.

The application scenario may solve the problem of resources conflicts between the data of the MTC UE and some special subframes, such as PSS and SSS on the subframes 0 and 5.

Application example 11:

The application example describes the condition that the base station configures that only some subframes include the related downlink information of the MTC UE. In an example embodiment, before the base station transmits indication information, it is defaulted that each downlink subframe may transmit the downlink data of the MTC UE. If the base station only transmits the data of the MTC UE on some subframes, the subframes including the downlink information of the MTC UE in a frame may be notified to the UE in a signalling indication manner.

In an example embodiment, the base station may indicate whether 10 subframes in each frame transmit the information of the MTC UE or not in a bitmap manner, and the information may be born on the PBCH of the subframe 0. Therefore, the UE may directly receive the downlink data from the corresponding subframes according to the indication after reading the subframe configuration information in the PBCH.

In addition, if the subframe 0 includes the control and service information of the MTC UE, the information can also be born on the M-PDCCH or ePDCCH of the subframe 0, then a conventional DCI format needs to be modified, and new bit information needs to be added on the basis of the original bit information.

Embodiment 3

The embodiment describes a process of determining a frequency-domain position of a PDSCH according to a method provided by the present invention by a UE when a downlink data channel is bandwidth-limited. The UE determines the frequency-domain position of the narrowband PDSCH according to a network access time bucket and different processes corresponding to transmission data.

At first, before the UE accesses a network and establishes a link with the network to finish synchronization, that is, in a RACH process or when the UE initially accesses the network, the UE receives the PDSCH at a preset frequency-domain position of a downlink subframe, moreover, the frequency-domain position may be discretely distributed within a fixed bandwidth.

Here, the preset frequency-domain resources position may be a central frequency-domain position of a system bandwidth in the subframe, and is discrete in the fixed bandwidth; or, the preset frequency-domain resources position may also be a central frequency-domain position of the system bandwidth in at least one of FDD-based subframes 0 and 5 and TDD-subframes 0 and 5 and the preset frequency-domain resources position may also be a predefined position of the other subframes in the aforementioned preset subframe positions, wherein the preset positions may be determined by virtue of indication information, or may be determined by virtue of a preset frequency hopping pattern.

Moreover, for a TDD-based special frame: in a DwPTS subframe and the subframes 1 and 6, the preset frequency-domain resources positions are fixed.

Then, when the base station and the UE exchange dynamic service data after synchronization is finished, the UE dynamically or semi-statically determines the frequency-domain position of the PDSCH in each subframe according to the received signalling.

During semi-static configuration, the signalling may be high-level signalling, and is born on a PBCH, or is born in a paging MSG in an SIB, or is born in MSG 2 and MSG 4 during RA.

During dynamic configuration, the frequency-domain position of the PDSCH in each subframe is dynamically indicated by a PDCCH or an ePDCCH in a cross-subframe manner.

For UE with limited coverage, the downlink data is selectively transmitted within the preset frequency-domain resources in all the downlink subframes.

Therefore, by combining different subframe frequency-domain position determination manners, the UE may be ensured to successfully access the network under the condition of reduced data channel bandwidth and the maximum scheduling flexibility is maintained.

Embodiment 4

The embodiment describes the DCI overhead of a downlink control channel of a UE under different frequency-domain position determination manners.

When a frequency-domain position of a PDSCH is a fixed central frequency-domain position of a system bandwidth, DCI corresponding to the UE may be compressed, and a conventional resources allocation bit field may be eliminated.

Or, for FDD-based subframes 0 and 5, or a TDD-based DwPTS subframe and subframes 1 and 6, or MSG2 and MSG4, when the frequency-domain position of the PDSCH may be predefined or fixed to be a certain frequency-domain position, a resources allocation bit in the DCI corresponding to the UE can also be eliminated.

When the frequency-domain position of the PDSCH in each subframe is determined in a manner of predefining multiple frequency-domain positions, the resources allocation bit field in the DCI may indicate a specific frequency-domain resources position of each subframe in a bitmap manner.

When the PDSCH of each subframe is dynamically indicated by the PDCCH or the ePDCCH, the bit field in the DCI is set in an original manner.

Therefore, DCI resources representing signalling may be reduced, and the overhead is reduced.

Embodiment 5

The embodiment describes the determination of a frequency-domain position of a PDSCH according to an RNTI for scrambling a PDCCH.

Specifically, when downlink data is the PDSCH and the corresponding PDCCH is scrambled by an SI-RNTI/RAR-RNTI, the PDSCH is selectively transmitted within a preset frequency-domain resources, and moreover, the frequency-domain position may be discretely distributed within a fixed bandwidth.

The discrete bandwidth is a discrete bandwidth corresponding to a Distributed Virtual Resource Block (DVRB) represented by type2 resources, for example: the corresponding discrete bandwidth from DVRB#0 to DVRB#5.

Here, the preset frequency-domain resources position may be a central frequency-domain position of a system bandwidth in the subframe; or the preset frequency-domain resources position may also be a central frequency-domain position of the system bandwidth in at least one of FDD-based subframes 0 and 5 and TDD-subframes 0 and 5 and the preset frequency-domain resources position may also be a predefined position of the other subframes in the aforementioned preset subframe positions, wherein the preset positions may be determined by virtue of indication information, or may be determined by virtue of a preset frequency hopping pattern.

In addition, when the PDCCH corresponding to the PDSCH is scrambled by a C-RNTI, the PDSCH is selectively transmitted within the frequency-domain resources corresponding to the system bandwidth. At this moment, the frequency-domain position may be dynamically determined according to resources representation of the DCI.

In addition, the PDCCH and PDSCH of the same UE are usually transmitted on different subframes, i.e. in a cross-subframe scheduling manner.

By using a manner of configuring the subframe by the base station to transmit the downlink data of the MTC UE, the data of the MTC UE may be flexibly configured, and the utilization rate of the resources is increased.

Although the application examples give descriptions by taking the MTC UE as an example, the transmission method and the receiving method of the downlink physical channel may also be applied to other scenarios and other types of UE including bandwidth-limited ordinary UE, not limited to the MTC UE. Moreover, the downlink physical channels include one or more of the PDCCH, the PCFICH, the PHICH, the ePDCCH and the PDSCH.

The example embodiments disclose the time-frequency resources determination method for the downlink system bandwidth of the low-cost and bandwidth-limited MTC UE on the basis of the original LTE system, and by the method, the narrowband MTC UE may be ensured to successfully receive downlink control and service information and seamlessly access the LTE network, thereby promoting the rapid evolution of the M2M service from the GSM to the LTE.

In another embodiment, software is also provided, which is configured to execute the technical scheme described in the embodiments and the example embodiments.

In another embodiment, a storage medium is also provided, which stores the software and includes, but not limited to, an optical disc, a floppy disk, a hard disk, an erasable memory and the like.

Obviously, those skilled in the art shall understand that the above-mentioned components and steps of the present invention can be realized by using general purpose calculating device, can be integrated in one calculating device or distributed on a network which consists of a plurality of calculating devices. Alternatively, the components and the steps of the present invention can be realized by using the executable program code of the calculating device. Consequently, they can be stored in the storing device and executed by the calculating device, or they are made into integrated circuit component respectively, or a plurality of components or steps thereof are made into one integrated circuit component. In this way, the present invention is not restricted to any particular hardware and software combination.

The scope of protection of the invention is solely limited by the appended claims.

**Claims**

1. An information transmission method, comprising:

   determining (S402), by a base station, that a receiving bandwidth of first User Equipment, UE, is smaller than a system bandwidth; and
   transmitting (S404), by the base station, downlink data to the first UE within the receiving bandwidth of the first UE according to a preset Radio Frame, RF, preset subframes and preset time-domain and frequency-domain resources, wherein a preset frequency-domain resources position comprises:
   a central frequency-domain position of the system bandwidth in at least one of subframes 0 and 5 and preset positions of the other subframes in subframe positions, wherein the preset positions are determined by the indication information or a preset frequency hopping pattern.

2. The method according to claim 1, wherein before transmitting (S404), by the base station, the downlink data to the first UE within the receiving bandwidth of the first UE according to the preset RF, the preset subframes and the preset time-domain and frequency-domain resources, the method further comprising:

   determining, by the base station, the RF, the subframes and the time-domain and frequency-domain resources according to presetting; or
   transmitting, by the base station, indication information to the first UE, wherein the indication information is configured to indicate the RF, the subframes and the time-domain and frequency-domain resources; or
   determining, by the base station, one or more of the RF, the subframes and the time-domain and frequency-domain resources according to presetting, and remaining information being determined according to indication information which is transmitted to the first UE by the base station.

3. The method according to claim 2, wherein an initial position of a preset time-domain resources position comprises:
   the nth Orthogonal Frequency Division Multiplexing, OFDM, symbol of a downlink subframe, wherein $0 \leq n \leq 5$.

4. The method according to claim 3, wherein the preset time-domain resources position comprises:
   OFDM symbols except a Secondary Synchronization Signal, SSS, a Primary Synchronization Signal, PSS, and a Physical Broadcast Channel, PBCH.

5. The method according to claim 2, wherein the indication information is transmitted in at least one of manners as follows:
   bearing on a PBCH; bearing on a public channel of the first UE; bearing on a control channel area of the first UE after joint coding with control information of the first UE; bearing on an Enhanced Physical Control Format Indicator Channel, ePCFICH, after independent coding; and bearing on Radio Resource Control, RRC, signalling.

6. The method according to claim 5, wherein bearing on the public channel of the first UE comprises:
   bearing in a paging Message, MSG, in a System Information Block, SIB, born on the public channel or bearing in a MSG2 and a MSG4 born on the public channel during Random Access, RA.

7. The method according to claim 1, wherein, in a Time Division Duplex, TDD,-based Downlink Pilot Time Slot, DwPTS, subframe, the preset frequency-domain resources position is fixed, or in TDD-based subframes 1 and 6, the preset frequency domain resources positions are fixed.

8. The method according to claim 2, wherein if the downlink data is the data born by the PDSCH of the first UE, the method further comprises at least one of the following:

   an initial position of time-domain resources of the PDSCH of the first UE is the same as that of the ePDCCH, a frequency-domain resources position of the PDSCH of the first UE is indicated by the PDCCH or ePDCCH of the first UE;
   when the base station transmits the indication information to the first UE, wherein the indication information is configured to indicate the RF, the subframes and the time-domain and frequency-domain resources, or the base station determines the one or more of the RF, the subframes and the time-domain and frequency-domain resources according to the presetting, and the remaining information is determined according to the indication information which is transmitted to the first UE by the base station, and during a Random Access Channel, RACH, process or initial access of the first UE, selectively transmitting the downlink data within the preset frequency-domain resources, and then selectively transmitting the downlink data of the first UE within the frequency-domain resources position corresponding to the indication information;

during the RACH process or initial access of the first UE, selectively transmitting the downlink data within the preset frequency-domain resources, and then selectively transmitting the downlink data of the first UE within the frequency-domain resources position corresponding to the system bandwidth.

9. The method according to claim 8, wherein the PDCCH and PDSCH of the first UE are transmitted on different subframes, and the PDCCH schedules the PDSCH in a cross-subframe manner.

10. The method according to claim 1, wherein the preset frequency-domain resources are discrete within a fixed bandwidth of the first UE.

11. The method according to claim 8, wherein the PDSCH scheduled by the PDCCH/ePDCCH is selectively transmitted within the preset frequency-domain resources, wherein the PDCCH/ePDCCH is scrambled by at least one of a System Information Radio Network Temporary Identifier, SI-RNTI, a Random Access RNTI, RA-RNTI, a Paging RNTI, P-RNTI, and a Temporary C-RNTI, Temp-C-RNTI.

12. The method according to claim 8, wherein the PDSCH scheduled by the PDCCH/ePDCCH is selectively transmitted within the frequency-domain resources indicated by the signalling, wherein the PDCCH/ePDCCH is scrambled by a Cell RNTI, C-RNTI, or, the PDSCH scheduled by the PDCCH/ePDCCH is selectively transmitted within the frequency-domain resources corresponding to the system bandwidth, wherein the PDCCH/ePDCCH is scrambled by the C-RNTI.

13. The method according to claim 8, wherein, for the first UE with limited coverage, the downlink data is selectively transmitted within the preset frequency-domain resources in all the downlink subframes.

14. An information transmission method, comprising:

determining (S602), by User Equipment, UE, that its own receiving bandwidth is smaller than a system bandwidth; and

receiving (S604), by the UE, downlink data within the receiving bandwidth according to a preset Radio Frame, RF, preset subframes and preset time-domain and frequency-domain resources, wherein a preset frequency-domain resources position comprises:

a central frequency-domain position of the system bandwidth in at least one of subframes 0 and 5 and preset positions of the other subframes in subframe positions, wherein the preset positions are determined by the indication information or a preset frequency hopping pattern.

15. The method according to claim 14, wherein before receiving (S604), by the UE, the downlink data within the receiving bandwidth according to the preset RF, the preset subframes and the preset time-domain and frequency-domain resources, the method further comprising:

determining, by the UE, the RF, the subframes and the preset time-domain and frequency-domain resources positions according to presetting; or

receiving, by the UE, indication information from a base station, wherein the indication information is configured to indicate preset subframe positions and the preset time-domain and frequency-domain resources positions; or determining, by the UE, one or more of the RF, the subframes and the time-domain and frequency-domain resources according to the presetting, and remaining information being determined according to the indication information received from the base station.

16. The method according to claim 15, wherein an initial position of the preset time-domain resources position comprises one of the following:

the nth Orthogonal Frequency Division Multiplexing, OFDM, symbol of a downlink subframe, wherein $0 \leq n \leq$

5; and

the first OFDM symbol detected blindly by the UE outside a control area of the UE.

**17.** An information transmission device, comprising:

a first determination component (52), configured to determine that a receiving bandwidth of a UE is smaller than a system bandwidth; and

a transmission component (54), configured to transmit downlink data to the UE within the receiving bandwidth of the UE according to a preset Radio Frame, RF, preset subframes and preset time-domain and frequency-domain resources, wherein a preset frequency-domain resources position comprises:

a central frequency-domain position of the system bandwidth in at least one of subframes 0 and 5 and preset positions of the other subframes in subframe positions, wherein the preset positions are determined by the indication information or a preset frequency hopping pattern.

**18.** An information transmission device, positioned in a UE, comprising:

a second determination component (72), configured to determine that its own receiving bandwidth is smaller than a system bandwidth; and

a receiving component (74), configured to receive downlink data within the receiving bandwidth according to a preset Radio Frame, RF, preset subframes and preset time-domain and frequency-domain resources, wherein a preset frequency-domain resources position comprises:

a central frequency-domain position of the system bandwidth in at least one of subframes 0 and 5 and preset positions of the other subframes in subframe positions, wherein the preset positions are determined by the indication information or a preset frequency hopping pattern.

**Patentansprüche**

**1.** Informationsübertragungsverfahren, umfassend:

Bestimmen (S402) durch eine Basisstation, dass eine Empfangsbandbreite des ersten Benutzergeräts, UE (User Equipment), kleiner als eine Systembandbreite ist; und

Übertragen (S404) von Downlink-Daten durch die Basisstation an das erste UE innerhalb der Empfangsbandbreite des ersten UE gemäß einem voreingestellten Funkrahmen, RF (Radio Frame), voreingestellten Unterrahmen und voreingestellten Zeitbereichs- und Frequenzbereichsressourcen, wobei eine voreingestellte Frequenzbereichsressourcenposition umfasst:

eine zentrale Frequenzbereichsposition der Systembandbreite in mindestens einem von Unterrahmen 0 und 5 und voreingestellten Positionen der anderen Unterrahmen in Unterrahmenpositionen, wobei die voreingestellten Positionen durch die Angabeinformationen oder ein voreingestelltes Frequenzsprungmuster bestimmt werden.

**2.** Verfahren nach Anspruch 1, wobei vor dem Übertragen (S404) der Downlink-Daten durch die Basisstation an das erste UE innerhalb der Empfangsbandbreite des ersten UE gemäß dem voreingestellten RF, den voreingestellten Unterrahmen und den voreingestellten Zeitbereichs- und Frequenzbereichsressourcen, das Verfahren ferner umfasst:

Bestimmen des RF, der Unterrahmen und der Zeitbereichs- und Frequenzbereichsressourcen gemäß der Voreinstellung, durch die Basisstation; oder

Übertragen von Angabeinformationen durch die Basisstation an das erste UE, wobei die Angabeinformationen konfiguriert sind, um den RF, die Unterrahmen und die Zeitbereichs- und Frequenzbereichsressourcen anzugeben; oder

Bestimmen eines oder mehrerer der RF, die Unterrahmen und die Zeitbereichs- und Frequenzbereichsressourcen durch die Basisstation gemäß der Voreinstellung, und die restlichen Informationen werden gemäß Angabeinformationen bestimmt, die durch die Basisstation an das erste UE übertragen werden.

**3.** Verfahren nach Anspruch 2, wobei eine Anfangsposition einer voreingestellten Zeitbereichsressourcenposition umfasst:

das n-te orthogonale Frequenzmultiplexverfahrens, OFDM (Orthogonal Frequency Division Multiplexing), -Symbol eines Downlink-Unterrahmens, wobei $0 \leq n \leq 5$ ist.

4. Verfahren nach Anspruch 3, wobei die voreingestellte Zeitbereichsressourcenposition umfasst: OFDM-Symbole mit Ausnahme eines sekundären Synchronisationssignals, SSS (Secondary Synchronization Signal), eines primären Synchronisationssignals, PSS (Primary Synchronization Signal), und eines Broadcast-Kanals, PBCH (Physical Broadcast Channel).

5. Verfahren nach Anspruch 2, wobei die Angabeinformationen auf mindestens eine der folgenden Arten übertragen werden:
Peilung auf einen PBCH; Peilung auf einen öffentlichen Kanal des ersten UE; Peilung auf einen Steuerkanalbereich des ersten UE nach gemeinsamer Codierung mit Steuerinformationen des ersten UE; Peilung auf einen Enhanced Physical Control Format Indicator Channel, ePCFICH, nach unabhängiger Codierung; und Peilung auf eine Funkbetriebsmittelsteuerungs, RRC (Radio Resource Control), -Signalisierung.

6. Verfahren nach Anspruch 5, wobei die Peilung des ersten UE auf den öffentlichen Kanal umfasst:
Peilung auf eine Paging-Nachricht, MSG (paging Message), in einem Systeminformationsblock, SIB (System Information Block), der auf den öffentlichen Kanal gepeilt ist, oder Peilung in einer MSG2 und einer MSG4, die auf den öffentlichen Kanal während Direktzugriff, RA (Random Access) gepeilt ist.

7. Verfahren nach Anspruch 1, wobei in einem Zeitduplex, TDD (Time Division Duplex),-basierten Downlink-Pilot-Zeitschlitz, DwPTS (Downlink Pilot Time Slot), - Unterrahmen die voreingestellte Frequenzbereichsressourcenposition festgelegt ist, oder in TDD-basierten Unterrahmen 1 und 6 die voreingestellten Frequenzbereichsressourcenpositionen festgelegt sind.

8. Verfahren nach Anspruch 2, wobei, wenn die Downlink-Daten die durch den PDSCH des ersten UE gepeilte Daten sind, das Verfahren ferner mindestens eines von Folgendem umfasst:

eine Anfangsposition von Zeitbereichsressourcen des PDSCH des ersten UE ist dieselbe wie die des ePDCCH, eine Frequenzbereichsressourcenposition des PDSCH des ersten UE wird durch den PDCCH oder ePDCCH des ersten UE angegeben;
wenn die Basisstation die Angabeinformationen an das erste UE überträgt, wobei die Angabeinformationen konfiguriert sind, um den RF, die Unterrahmen und die Zeitbereichs- und Frequenzbereichsressourcen anzugeben, oder die Basisstation bestimmt das einer oder mehrere der RF, der Unterrahmen und der Zeitbereichs- und Frequenzbereichsressourcen gemäß der Voreinstellung, und die verbleibenden Informationen werden gemäß den Angabeinformationen bestimmt, die von der Basisstation an das erste UE übertragen werden, und während eines Direktzugriffskanal, RACH (Random Access Channel), -Verfahrens oder Anfangszugriffs des ersten UE, selektives Übertragen der Downlink-Daten innerhalb der voreingestellten Frequenzbereichsressourcen und dann selektives Übertragen der Downlink-Daten des ersten UE innerhalb der Frequenzbereichsressourcenposition entsprechend den Angabeinformationen;
während des RACH-Verfahrens oder dem Anfangszugriff des ersten UE, selektives Übertragen der Downlink-Daten innerhalb der voreingestellten Frequenzbereichsressourcen und dann selektives Übertragen der Downlink-Daten des ersten UE innerhalb der Frequenzbereichsressourcenposition entsprechend der Systembandbreite.

9. Verfahren nach Anspruch 8, wobei der PDCCH und der PDSCH des ersten UE auf unterschiedlichen Unterrahmen übertragen werden und der PDCCH den PDSCH auf unterrahmenübergreifende Weise plant.

10. Verfahren nach Anspruch 1, wobei die voreingestellten Frequenzbereichsressourcen innerhalb einer festgelegten Bandbreite des ersten UE diskret sind.

11. Verfahren nach Anspruch 8, wobei der durch den PDCCH/ePDCCH geplante PDSCH selektiv innerhalb der voreingestellten Frequenzbereichsressourcen übertragen wird, wobei der PDCCH/ePDCCH durch mindestens eines von einer temporären Systeminformationsfunknetz-Kennung SI-RNTI (System Information Radio Network Temporary Identifier), einem Direktzugriffs-RNTI, RA-RNTI (Random Access RNTI), einem Paging-RNTI, P-RNTI (Paging RNTI), und einem temporären C-RNTI, Temp-C-RNTI (Temporary C-RNTI) verscrambelt wird.

12. Verfahren nach Anspruch 8, wobei der durch den PDCCH/ePDCCH geplante PDSCH selektiv innerhalb der durch die Signalisierung angegebenen Frequenzbereichsressourcen übertragen wird, wobei der PDCCH/ePDCCH durch einen Zellen-RNTI, C-RNTI (Cell RNTI) verscrambelt wird, oder der durch den PDCCH/ePDCCH geplante PDSCH selektiv innerhalb der Frequenzbereichsressourcen entsprechend der Systembandbreite übertragen wird, wobei der PDCCH/ePDCCH durch den C-RNTI verscrambelt wird.

13. Verfahren nach Anspruch 8, wobei für das erste UE mit begrenzter Abdeckung die Downlink-Daten selektiv innerhalb der voreingestellten Frequenzdomänen-Ressourcen in allen Downlink-Unterrahmen übertragen werden.

14. Informationsübertragungsverfahren, umfassend:

Bestimmen (S602) durch das Benutzergerät UE, dass dessen eigene Empfangsbandbreite kleiner als eine Systembandbreite ist; und
Empfangen (S604) von Downlink-Daten durch das UE innerhalb der Empfangsbandbreite gemäß einem voreingestellten Funkrahmen, RF, voreingestellten Unterrahmen und voreingestellten Zeitbereichs- und Frequenzbereichsressourcen, wobei eine voreingestellte Frequenzbereichsressourcenposition umfasst:
eine zentrale Frequenzbereichsposition der Systembandbreite in mindestens einem von Unterrahmen 0 und 5 und voreingestellten Positionen der anderen Unterrahmen in Unterrahmenpositionen, wobei die voreingestellten Positionen durch die Angabeinformationen oder ein voreingestelltes Frequenzsprungmuster bestimmt werden.

15. Verfahren nach Anspruch 14, wobei vor dem Empfangen (S604) der Downlink-Daten durch das UE innerhalb der Empfangsbandbreite gemäß dem voreingestellten RF, den voreingestellten Unterrahmen und den voreingestellten Zeitbereichs- und Frequenzbereichsressourcen, das Verfahren ferner umfasst:

Bestimmen des RF, der Unterrahmen und der voreingestellten Zeitbereichs- und Frequenzbereichsressourcen gemäß der Voreinstellung durch das UE; oder
Empfangen von Angabeinformationen von einer Basisstation durch das UE, wobei die Angabeinformationen konfiguriert sind, um voreingestellte Unterrahmenpositionen und die voreingestellten Zeitbereichs- und Frequenzbereichsressourcen anzugeben; oder
Bestimmen eines oder mehrerer der RF, der Unterrahmen und der Zeitbereichs- und Frequenzbereichsressourcen durch das UE gemäß der Voreinstellung und Bestimmen der restlichen Informationen gemäß den von der Basisstation empfangenen Angabeinformationen.

16. Verfahren nach Anspruch 15, wobei eine Anfangsposition der voreingestellten Zeitbereichsressourcenposition eines von Folgendem umfasst:

das n-te orthogonale Frequenzmultiplexverfahren, OFDM (Orthogonal Frequency Division Multiplexing), -Symbol eines Downlink-Unterrahmens, wobei $0 \le n \le 5$ ist; und
das erste OFDM-Symbol, das von dem UE außerhalb eines Kontrollbereichs des UE blind erkannt wird.

17. Informationsübertragungsvorrichtung, umfassend:

eine erste Bestimmungskomponente (52), die konfiguriert ist, um zu bestimmen, dass eine Empfangsbandbreite eines UE kleiner als eine Systembandbreite ist; und
eine Übertragungskomponente (54), die konfiguriert ist, um Downlink-Daten an das UE innerhalb der Empfangsbandbreite des ersten UE gemäß einem voreingestellten Funkrahmen, RF, voreingestellten Unterrahmen und voreingestellten Zeitbereichs- und Frequenzbereichsressourcen zu übertragen, wobei eine voreingestellte Frequenzbereichsressourcenposition umfasst:
eine zentrale Frequenzbereichsposition der Systembandbreite in mindestens einem von Unterrahmen 0 und 5 und voreingestellten Positionen der anderen Unterrahmen in Unterrahmenpositionen, wobei die voreingestellten Positionen durch die Angabeinformationen oder ein voreingestelltes Frequenzsprungmuster bestimmt werden.

18. Informationsübertragungsvorrichtung, die in einem UE positioniert ist, umfassend:

eine zweite Bestimmungskomponente (72), die konfiguriert ist, um zu bestimmen, dass ihre eigene Empfangsbandbreite kleiner als eine Systembandbreite ist; und
eine Empfangskomponente (74), die konfiguriert ist, um Downlink-Daten innerhalb der Empfangsbandbreite gemäß einem voreingestellten Funkrahmen, RF, voreingestellten Unterrahmen und voreingestellten Zeitbereichs- und Frequenzbereichsressourcen zu empfangen, wobei eine voreingestellte Frequenzbereichsressourcenposition umfasst:
eine zentrale Frequenzbereichsposition der Systembandbreite in mindestens einem von Unterrahmen 0 und 5 und voreingestellten Positionen der anderen Unterrahmen in Unterrahmenpositionen, wobei die voreingestellten Positionen durch die Angabeinformationen oder ein voreingestelltes Frequenzsprungmuster bestimmt werden.

**Revendications**

1. Procédé de transmission d'informations comprenant :

la détermination (S402), par une station de base, du fait qu'une bande passante de réception d'un premier équipement utilisateur, UE, est inférieure à une bande passante de système ; et
la transmission (S404), par la station de base, de données en liaison descendante vers le premier UE dans la bande passante de réception du premier UE selon une trame radio, RF, prédéfinie, des sous-trames prédéfinies et des ressources de domaine temporel et de domaine fréquentiel prédéfinies, dans lequel une position de ressources de domaine fréquentiel prédéfinie comprend :
une position centrale de domaine fréquentiel de la bande passante de système dans au moins l'une des sous-trames 0 et 5 et des positions prédéfinies des autres sous-trames dans des positions de sous-trames, dans lequel les positions prédéfinies sont déterminées par les informations d'indication ou par un modèle de saut de fréquence prédéfini.

2. Procédé selon la revendication 1, dans lequel, avant la transmission (S404), par la station de base, des données en liaison descendante vers le premier UE dans la bande passante de réception du premier UE selon la RF prédéfinie, les sous-trames prédéfinies et les ressources de domaine temporel et de domaine fréquentiel prédéfinies, le procédé comprenant en outre :

la détermination, par la station de base, de la RF, des sous-trames et des ressources de domaine temporel et de domaine fréquentiel en fonction de la prédéfinition ; ou
la transmission, par la station de base, d'informations d'indication au premier UE, dans lequel les informations d'indication sont configurées pour indiquer la RF, les sous-trames et les ressources de domaine temporel et de domaine fréquentiel ; ou
la détermination, par la station de base, d'un ou plusieurs éléments parmi les RF, les sous-trames et les ressources de domaine temporel et de domaine fréquentiel en fonction de la prédéfinition, les informations restantes étant déterminées en fonction des informations d'indication qui sont transmises au premier UE par la station de base.

3. Procédé selon la revendication 2, dans lequel une position initiale d'une position de ressources de domaine temporel prédéfinie comprend :
le nième symbole de multiplexage par répartition orthogonale de la fréquence, OFDM, d'une sous-trame en liaison descendante, dans lequel $0 \leq n \leq 5$.

4. Procédé selon la revendication 3, dans lequel la position de ressources de domaine temporel prédéfinie comprend :
les symboles OFDM à l'exception d'un signal de synchronisation secondaire, SSS, d'un signal de synchronisation primaire, PSS, et d'un canal de diffusion physique, PBCH.

5. Procédé selon la revendication 2, dans lequel les informations d'indication sont transmises d'au moins l'une des manières suivantes :
diffusion sur un PBCH ; diffusion sur un canal public du premier UE ; diffusion sur une zone de canal de commande du premier UE après un codage conjoint avec des informations de commande du premier UE ; diffusion sur un canal indicateur de format de commande physique amélioré, ePCFICH, après un codage indépendant ; et diffusion sur la signalisation de commande de ressources radio, RRC.

6. Procédé selon la revendication 5, dans lequel la diffusion sur le canal public du premier UE comprend :
la diffusion dans un message de radiomessagerie, MSG, dans un bloc d'informations système, SIB, issu du canal public ou la diffusion dans un MSG2 et un MSG4 issus du canal public pendant un accès aléatoire, RA.

7. Procédé selon la revendication 1, dans lequel, dans une sous-trame d'intervalle de temps pilote en liaison descendante, DwPTS, basée sur un duplex par répartition dans le temps, TDD, la position des ressources de domaine fréquentiel prédéfinie est fixe ou, dans les sous-trames 1 et 6 basées sur TDD, les positions des ressources de domaine fréquentiel prédéfinies sont fixes.

8. Procédé selon la revendication 2, dans lequel, si les données en liaison descendante sont les données issues du PDSCH du premier UE, le procédé comprend en outre au moins l'un des éléments suivants :

une position initiale des ressources de domaine temporel du PDSCH du premier UE est la même que celle de l'ePDCCH, une position des ressources de domaine fréquentiel du PDSCH du premier UE est indiquée par le PDCCH ou l'ePDCCH du premier UE ;

lorsque la station de base transmet les informations d'indication au premier UE, dans lequel les informations d'indication sont configurées pour indiquer la RF, les sous-trames et les ressources de domaine temporel et de domaine fréquentiel ou la station de base détermine un ou plusieurs éléments parmi la RF, les sous-trames et les ressources de domaine temporel et de domaine fréquentiel en fonction de la prédéfinition et les informations restantes sont déterminées selon les informations d'indication qui sont transmises au premier UE par la station de base et, au cours d'un processus de canal d'accès aléatoire, RACH, ou d'un accès initial du premier UE, la transmission sélective des données en liaison descendante dans les ressources de domaine fréquentiel prédéfinies, puis la transmission sélective des données en liaison descendante du premier UE dans la position de ressources de domaine fréquentiel correspondant aux informations d'indication ;

pendant le processus RACH ou l'accès initial du premier UE, la transmission sélective des données en liaison descendante dans les ressources de domaine fréquentiel prédéfinies, puis la transmission sélective des données en liaison descendante du premier UE dans la position de ressources de domaine fréquentiel correspondant à la bande passante de système.

9. Procédé selon la revendication 8, dans lequel le PDCCH et le PDSCH du premier UE sont transmis sur des sous-trames différentes et le PDCCH programme le PDSCH entre les différentes sous-trames.

10. Procédé selon la revendication 1, dans lequel les ressources de domaine fréquentiel prédéfinies sont indépendantes dans une bande passante fixe du premier UE.

11. Procédé selon la revendication 8, dans lequel le PDSCH programmé par le PDCCH/ePDCCH est transmis de manière sélective dans les ressources de domaine fréquentiel prédéfinies, dans lequel le PDCCH/ePDCCH est brouillé par au moins un élément parmi un identifiant temporaire de réseau radio d'informations système, SI-RNTI, un RNTI à accès aléatoire, un RA-RNTI, un RNTI de radiomessagerie, un P-RNTI et un C-RNTI temporaire, Temp-C-RNTI.

12. Procédé selon la revendication 8, dans lequel le PDSCH programmé par le PDCCH/ePDCCH est transmis de manière sélective dans les ressources de domaine fréquentiel indiquées par la signalisation, dans lequel le PDCCH/ePDCCH est brouillé par un RNTI de cellule, un C-RNTI ou le PDSCH programmé par le PDCCH/ePDCCH est transmis de manière sélective dans les ressources de domaine fréquentiel correspondant à la bande passante de système, dans lequel le PDCCH/ePDCCH est brouillé par le C-RNTI.

13. Procédé selon la revendication 8, dans lequel, pour le premier UE avec une couverture limitée, les données en liaison descendante sont transmises de manière sélective dans les ressources de domaine fréquentiel prédéfinies dans toutes les sous-trames en liaison descendante.

14. Procédé de transmission d'informations comprenant :

la détermination (S602), par un équipement utilisateur, UE, du fait que sa propre bande passante de réception est inférieure à une bande passante de système ; et

la réception (S604), par l'UE, de données en liaison descendante dans la bande passante de réception selon une trame radio prédéfinie, RF, des sous-trames prédéfinies et des ressources de domaine temporel et de domaine fréquentiel prédéfinies, dans lequel une position de ressources de domaine fréquentiel prédéfinie comprend :

une position centrale de domaine fréquentiel de la bande passante de système dans au moins l'une des sous-trames 0 et 5 et des positions prédéfinies des autres sous-trames dans des positions de sous-trames, dans lequel les positions prédéfinies sont déterminées par les informations d'indication ou par un modèle de saut de fréquence prédéfini.

15. Procédé selon la revendication 14, dans lequel, avant la réception (S604), par l'UE, des données en liaison descendante dans la bande passante de réception selon la RF prédéfinie, les sous-trames prédéfinies et les ressources de domaine temporel et de domaine fréquentiel prédéfinies, le procédé comprenant en outre :

la détermination, par l'UE, de la RF, des sous-trames et des positions de ressources de domaine temporel et de domaine fréquentiel prédéfinies en fonction de la prédéfinition ; ou

la réception, par l'UE, d'informations d'indication provenant d'une station de base, dans lequel les informations d'indication sont configurées pour indiquer des positions de sous-trame prédéfinies et les positions de ressources de domaine temporel et de domaine fréquentiel prédéfinies ; ou

la détermination, par l'UE, d'une ou plusieurs des RF, des sous-trames et des ressources de domaine temporel et de domaine fréquentiel selon la prédéfinition et les informations restantes étant déterminées selon les informations d'indication reçues de la station de base.

16. Procédé selon la revendication 15, dans lequel une position initiale de la position de ressources de domaine temporel prédéfinies comprend l'un des éléments suivants :

le nième symbole de multiplexage par répartition orthogonale de la fréquence, OFDM, d'une sous-trame en liaison descendante, dans lequel $0 \leq n \leq 5$ ; et

le premier symbole OFDM détecté à l'aveugle par l'UE en dehors d'une zone de commande de l'UE.

17. Dispositif de transmission d'informations comprenant :

un premier composant de détermination (52), configuré pour déterminer qu'une bande passante de réception d'un UE est inférieure à une bande passante de système ; et

un composant de transmission (54), configuré pour transmettre des données en liaison descendante à l'UE dans la bande passante de réception de l'UE selon une trame radio, RF, prédéfinie, des sous-trames prédéfinies et des ressources de domaine temporel et de domaine fréquentiel prédéfinies, dans lequel une position de ressources de domaine fréquentiel prédéfinie comprend :

une position centrale de domaine fréquentiel de la bande passante de système dans au moins l'une des sous-trames 0 et 5 et des positions prédéfinies des autres sous-trames dans des positions de sous-trames, dans lequel les positions prédéfinies sont déterminées par les informations d'indication ou par un modèle de saut de fréquence prédéfini.

18. Dispositif de transmission d'informations, positionné dans un UE, comprenant :

un second composant de détermination (72), configuré pour déterminer que sa propre bande passante de réception est inférieure à une bande passante de système ; et

un composant de réception (74), configuré pour recevoir des données en liaison descendante dans la bande passante de réception selon une trame radio, RF, prédéfinie, des sous-trames prédéfinies et des ressources de domaine temporel et de domaine fréquentiel prédéfinies, dans lequel une position de ressources de domaine fréquentiel prédéfinie comprend :

une position centrale de domaine fréquentiel de la bande passante de système dans au moins l'une des sous-trames 0 et 5 et des positions prédéfinies des autres sous-trames dans des positions de sous-trames, dans lequel les positions prédéfinies sont déterminées par les informations d'indication ou par un modèle de saut de fréquence prédéfini.

**Fig. 1**

**Fig. 2**

**Fig. 3**

A base station determines that a receiving bandwidth of UE is smaller than a system bandwidth or a component carrier accessed by the UE is of an NCT

S402

The base station transmits downlink data to the UE within the receiving bandwidth of the UE according to a preset RF, preset subframes and/ or preset time-domain and frequency-domain resources

S404

**Fig. 4**

First determination component
<u>52</u>

Transmission component
<u>54</u>

**Fig.5**

UE determines that its own receiving bandwidth is smaller than a system bandwidth or a component carrier accessed by the UE is of an NCT

S602

The UE receives downlink data within the receiving bandwidth according to a preset RF, preset subframes and/or time-domain and frequency-domain resources

S604

**Fig. 6**

Second determination component
72

Receiving component
74

**Fig. 7**

An eNodeB, when transmitting a downlink physical channel of UE, maps the downlink information of the UE to a corresponding time-frequency domain position within a predefined bandwidth of a configuration subframe of the UE  ⌐ S802

The eNodeB bears the downlink information of the UE on the downlink physical channel of the configuration subframe, and transmits the downlink information  ⌐ S804

**Fig. 8**

S902

UE judges whether a supported maximum receiving bandwidth is smaller than a current downlink system bandwidth or not

No

Yes S906

S904

The UE receives downlink information within its own predefined bandwidth at the corresponding time-frequency position

The UE receives the downlink information within the current downlink system bandwidth

**Fig. 9**

Conventional UE PDCCH/PHICH/PCFICH

M-PDSCH

Subframe 0 (1ms)

10MHz

PSS

PBCH

1.4MHz

First slot (0.5ms)

Second slot (0.5ms)

Conventional UE PDSCH

**Fig. 10**

**Fig. 11**

**Fig. 12**

Conventional UE PDSCH

**Fig. 13**

Conventional UE
PDCCH/PHICH/PCFICH

Downlink information of the MTC UE

**Fig. 14**

Fig. 15

Fig. 16

PRB

Subframe #1    Subframe #2    Subframe #3    Subframe #4    Subframe #6    Subframe #7    Subframe #8    Subframe #9

t

MTC UE Information

# Fig. 17

PRB

Subframe #0    M T C  U E    Subframe #1    Subframe #2    Subframe #3    Subframe #4

t            Information

# Fig. 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- 3rd Generation Partnership Project; Technical Specification Group Radio Access Network; Study on provision of low-cost MTC UEs based on LTE; (Release 11). *3GPP DRAFT; R1-123075_36888-200, 3RD GENERATION PARTNERSHIP PROJECT (3GPP),* 11 June 2012
- **HUAWEI et al.** Bandwidth reduction for low cost MTC UE and text proposal. *3GPP DRAFT; R1-120051, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE,* 31 January 2012, vol. RAN WG1

- **HUAWEI et al.** Recommendation for bandwidth reduction. *3GPP DRAFT; R1-121708 RECOMMENDATION FOR BANDWIDTH REDUCTION, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE,* 23 March 2012, vol. RAN WG1 (Jeju
- **FUJITSU.** Summary of email discussion on CSS for ePDCCH. *3GPP DRAFT; R1-121193 CSS ON EPDCCH, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE,* 29 March 2012, vol. RAN WG1 (Jeju